# EUROPÄISCHE PATENTANMELDUNG

(11) **EP 4 768 821 A1**
(43) Veröffentlichungstag der Anmeldung: **01.07.2026**
(21) Anmeldenummer: 25225683.9
(22) Anmeldetag: 19.12.2025
(51) Int. Cl.: F24S 25/636

(54) **BAUGRUPPE EINER KLEMMVORRICHTUNG, KLEMMVORRICHTUNG UND BEFESTIGUNGSANORDNUNG**

(30) Priorität: 20.12.2024 DE 202024107506 U
(71) Anmelder: varista GmbH, 87647 Unterthingau (DE)
(72) Erfinder: FLESCHUTZ, Walter, 87647 Unterhingau (DE); STEINMEIER, Daniel, 87647 Unterhingau (DE)
(74) Vertreter: Isarpatent

(57) **Zusammenfassung**

Die Erfindung betrifft eine Baugruppe (2; 2') einer Klemmvorrichtung (1, 1a; 1'), mit einer Spreizklemme (3; 3') mit Schenkeln (5; 5'), die in einen Aufnahmebereich (97) einer Befestigungsschiene (79) einsetzbar und nach dem Einsetzen in den Aufnahmebereich (97) spreizbar sind, und mit einem Kunststoffbauteil (7, 7a, 7b; 7'), das an der Spreizklemme (3; 3') gehalten und gemeinsam mit den Schenkeln (5; 5') in den Aufnahmebereich (97) einsetzbar ist und Berührungsbereiche (11; 11') aufweist, die derart angeordnet sind, dass nach dem Einsetzen der Schenkel (5; 5') und des Kunststoffbauteils (7, 7a, 7b; 7') in den Aufnahmebereich (97) durch einen Kontakt des Kunststoffbauteils (7, 7a, 7b; 7') mit der Befestigungsschiene (79) in den Berührungsbereichen (11; 11') mindestens in einem Zustand der Spreizklemme (3; 3') vor dem Spreizen der Schenkel (5; 5') für das Klemmen der Spreizklemme (3; 3') an der Befestigungsschiene (79) eine direkte Berührung der Schenkel (5; 5') mit diesen jeweils benachbarten Abschnitten der Befestigungsschiene (79) verhinderbar ist. Die Erfindung bezieht sich ferner auf eine Klemmvorrichtung (1, 1a; 1') mit einer erfindungsgemäßen Baugruppe (2; 2') sowie auf eine Befestigungsanordnung (100, 100a; 100') mit mindestens einer Befestigungsschiene (79) und mindestens einer Klemmvorrichtung (1, 1a; 1') umfassend eine erfindungsgemäße Baugruppe (2; 2') sowie ein mit der Baugruppe (2; 2') gekoppeltes Montageelement (75, 75a; 75').

## Beschreibung

### GEBIET DER ERFINDUNG

Die Erfindung bezieht sich auf eine Baugruppe einer Klemmvorrichtung sowie auf eine Klemmvorrichtung mit einer derartigen Baugruppe. Weiterhin betrifft die Erfindung eine Befestigungsanordnung mit mindestens einer Befestigungsschiene und mindestens einer Klemmvorrichtung, mittels der eine Komponente, insbesondere ein Photovoltaikmodul, an der Befestigungsschiene klemmend befestigt werden kann.

### TECHNISCHER HINTERGRUND

Wenngleich die vorliegende Erfindung im Zusammenhang mit der Befestigung von Komponenten unterschiedlichster Art anwendbar und nützlich sein kann, sollen die Erfindung und die ihr zu Grunde liegende Problematik nachfolgend zunächst am Beispiel der Befestigung eines Photovoltaikmoduls näher erläutert werden, ohne jedoch die Erfindung dahingehend einzuschränken.

Anordnungen mit Schienen und weiteren, mit diesen koppelbaren Befestigungselementen, die zum Befestigen eines Objekts an einer oder mehrerer der Schienen dienen, sind als solche bekannt.

Beispielsweise wird ein Befestigungssystem zum Befestigen von Befestigungsschienen und Solarmodulen an einem Gebäudedach in der DE 20 2012 004 615 U1 beschrieben. Bei diesem Befestigungssystem ist eine Halterung vorgesehen, in der ein parallelogramm- oder rhomboidförmiges Klemmelement zwischen einer Ent- und einer Verriegelungsposition drehbar aufgenommen ist. Hierbei kann das Klemmelement in der Verriegelungsposition mit einem Aufnahmekanal einer Befestigungsschiene eine Reibschlussverbindung bilden. In der DE 20 2012 004 615 U1 wird zum Beispiel beschrieben, die Halterung aus einem Kunststoffmaterial, insbesondere einem POM-Material, und das Klemmelement aus Metall herzustellen.

Mit dem in der DE 20 2012 004 615 U1 beschriebenen Befestigungssystem ist bereits eine zuverlässige und stabile Befestigung von Schienen und Solarmodulen möglich.

Gleichwohl wäre es vor diesem Hintergrund wünschenswert, über eine Befestigungsmöglichkeit zu verfügen, die beispielsweise auf dem Gebiet der Halterung von Bauteilen und Komponenten für die Gewinnung von Sonnenenergie, insbesondere der Befestigung von Solar- oder Photovoltaikmodulen, Anwendung finden kann, in Handhabung und Montage noch einfacher ist und zugleich eine Befestigung mit hoher Stabilität und Zuverlässigkeit ermöglicht.

### ZUSAMMENFASSUNG DER ERFINDUNG

Es ist somit eine Aufgabe der Erfindung, eine weiter verbesserte, stabile, zuverlässige und einfach handhabbare Befestigung von Komponenten, insbesondere auf dem Gebiet der Solarenergietechnik wie beispielsweise der Befestigung von Photovoltaikmodulen, zu ermöglichen.

Erfindungsgemäß wird diese Aufgabe durch eine Baugruppe mit den Merkmalen des Anspruchs 1 und/oder durch eine Klemmvorrichtung mit den Merkmalen des Anspruchs 13 und/oder durch eine Befestigungsanordnung mit den Merkmalen des Anspruchs 15 gelöst.

Es wird demgemäß eine Baugruppe einer Klemmvorrichtung vorgeschlagen, mit:
- einer Spreizklemme mit Schenkeln, die in einen Aufnahmebereich einer Befestigungsschiene einsetzbar und zum Klemmen der Spreizklemme an der Befestigungsschiene nach dem Einsetzen in den Aufnahmebereich spreizbar sind, und
- mit einem Kunststoffbauteil, das an der Spreizklemme gehalten und gemeinsam mit den Schenkeln in den Aufnahmebereich einsetzbar ist und Berührungsbereiche aufweist, die derart angeordnet sind, dass nach dem Einsetzen der Schenkel und des Kunststoffbauteils in den Aufnahmebereich durch einen Kontakt des Kunststoffbauteils mit der Befestigungsschiene in den Berührungsbereichen mindestens in einem Zustand der Spreizklemme vor dem Spreizen der Schenkel für das Klemmen der Spreizklemme an der Befestigungsschiene eine direkte Berührung der Schenkel mit diesen jeweils benachbarten Abschnitten der Befestigungsschiene verhinderbar ist.

Ferner wird eine Klemmvorrichtung mit einer derartigen Baugruppe, einem Montageelement und einer das Montageelement und die Spreizklemme der Baugruppe koppelnden Schraube, mittels der die Schenkel der Spreizklemme spreizbar sind, vorgeschlagen.

Darüber hinaus schlägt die Erfindung eine Befestigungsanordnung vor, mit mindestens einer Befestigungsschiene und mindestens einer Klemmvorrichtung umfassend eine erfindungsgemäße Baugruppe sowie ein mit der Baugruppe gekoppeltes Montageelement. Hierbei ist die Klemmvorrichtung für eine klemmende Befestigung einer Komponente, insbesondere eines Photovoltaikmoduls, an der Befestigungsschiene mittels des Montageelements ausgebildet.

Eine Idee der Erfindung besteht darin, mittels des Kunststoffbauteils durch dessen Zusammenspiel mit der Spreizklemme und der Befestigungsschiene ein Verschieben der Spreizklemme entlang der Befestigungsschiene zur Anpassung, Veränderung und/oder genauen Einstellung der Position der Spreizklemme zu erleichtern. Dies gelingt, indem mit Hilfe des Kunststoffbauteils ein direkter Kontakt von Spreizklemme und Schiene vor dem abschließenden Verklemmen der Spreizklemme in der Schiene verhindert werden kann. Auf diese Weise wird, gerade wenn die Spreizklemme und die Befestigungsschiene jeweils beispielsweise aus einem Metallmaterial, etwa einem Aluminiummaterial, gefertigt sind, ein schwergängiges und/oder stockendes Verschieben der Spreizklemme aufgrund direkten Kontaktes dieser beiden Elemente vermieden. Mittels der Erfindung wird auf diese Weise ein Positionieren der Spreizklemme längs der Schiene erheblich vereinfacht und damit die Handhabung für eine Monteursperson deutlich verbessert.

Die Nutzung einer Spreizklemme bietet zudem eine zweckmäßig und wirtschaftlich herstell- und montierbare, einfach handhabbare, stabile und zuverlässige Befestigung.

Indem das Kunststoffbauteil an der Spreizklemme gehalten ist, kann es gemeinsam mit dieser in einfacher Weise gehandhabt werden.

Vorteilhafte Ausgestaltungen und Weiterbildungen der Erfindung ergeben sich aus den weiteren Unteransprüchen sowie aus der Beschreibung unter Bezugnahme auf die Figuren.

In einer Ausgestaltung ist das Kunststoffbauteil mit einer Flexibilität versehen, welche es beim Zusammenbau der Baugruppe ermöglicht, das Kunststoffbauteil mittels elastischer Verformung desselben mit der Spreizklemme zum Halten an dieser formschlüssig in Eingriff zu bringen. Dies erleichtert einen Zusammenbau der Baugruppe, insbesondere wenn eine Spreizklemme mit stabiler Gestaltung vorgesehen ist, die vergleichsweise viel Kraft für eine elastische Verformung zum Zusammenbau mit dem Kunststoffbauteil erfordern würde. Der Zusammenbau kann somit mit dieser Ausgestaltung im Wesentlichen mittels der elastischen Verformung des Kunststoffbauteils erfolgen. Die Vormontage der Baugruppe wird hierdurch erleichtert.

Gemäß einer bevorzugten Weiterbildung sind die Berührungsbereiche des Kunststoffbauteils jeweils als Gleitflächen ausgebildet, wobei die Gleitflächen nach dem Einsetzen in den Aufnahmebereich und vor dem Spreizen der Schenkel der Spreizklemme ein gleitendes, insbesondere leichtgängiges, Verschieben der Baugruppe entlang der Befestigungsschiene ermöglichen. Dies erleichtert der Monteursperson die Handhabung ganz erheblich und trägt zu einer zeitsparenden und präzisen Befestigung der gewünschten Komponenten wie etwa der Photovoltaikmodule bei. Gerade bei Arbeiten etwa auf einer Dachfläche ist eine zweckmäßig, einfache Handhabung der Klemmvorrichtung von erheblichem Vorteil. Insbesondere können alle potentiellen Berührungsbereiche des Kunststoffbauteils mit der Befestigungsschiene als Gleitflächen dienen.

In einer Weiterbildung wird durch den Kontakt des Kunststoffbauteils mit der Befestigungsschiene in den Berührungsbereichen die direkte Berührung der Schenkel mit den diesen benachbarten Abschnitten der Befestigungsschiene in zwei nichtparallelen, insbesondere zwei quer zueinander verlaufenden, Richtungen, bevorzugt in einer Tiefenrichtung und einer Querrichtung des Aufnahmebereichs, mindestens in dem Zustand der Spreizklemme vor dem Spreizen der Schenkel für das Klemmen der Spreizklemme an der Befestigungsschiene verhindert. Das Verschieben der Spreizklemme und die Positionsanpassung derselben vor dem Verklemmen werden somit noch weiter erleichtert.

Insbesondere ist das Kunststoffbauteil als ein Kunststoffclip ausgebildet. Ein derartiger Kunststoffclip kann zur Bildung der Baugruppe in einfacher und rascher Weise mit der Spreizklemme zusammengebaut werden und trägt ferner zu einer wirtschaftlichen Herstellung der Baugruppe bei.

Gemäß einer Ausgestaltung umgreift das Kunststoffbauteil die Schenkel. Insbesondere kann hierbei das Kunststoffbauteil die Schenkel gemeinsam umgreifen. Auf diese Weise kann das Kunststoffbauteil abschnittsweise zwischen jeweils einem Schenkel und einem diesem benachbarten Abschnitt der Befestigungsschiene angeordnet werden, wenn die Schenkel und das Kunststoffbauteil in den Aufnahmebereich eingesetzt sind. Somit kann zuverlässig dafür gesorgt werden, dass ein direkter Kontakt der Schenkel mit der Befestigungsschiene unterbleibt, bevor die Schenkel gespreizt werden.

In einer Ausgestaltung ist das Kunststoffbauteil mit einem Rahmen oder mit einer rahmenartigen Form ausgebildet, wobei der Rahmen oder die rahmenartige Form Rahmenlängsabschnitte und Rahmenquerabschnitte aufweist, die einen Rahmeninnenbereich des Rahmens oder der rahmenartigen Form begrenzen. Bei dieser Ausgestaltung sind die Schenkel der Spreizklemme, insbesondere gemeinsam, jeweils abschnittsweise in dem Rahmeninnenbereich aufgenommen. Somit wird ein auch in der Vormontage der Baugruppe gut handhabbares, stabiles Kunststoffbauteil erzielt, das gut geeignet ist, um die Schenkel zu umgreifen.

Gemäß einer Weiterbildung ist das Kunststoffbauteil als ein dreidimensionales rahmenartiges Element ausgebildet. Insbesondere kann hierbei das dreidimensionale rahmenartige Element zwei einander gegenüberliegend angeordnete der Rahmenlängsabschnitte und zwei einander gegenüberliegend angeordnete der Rahmenquerabschnitte aufweisen. Ein derartiges dreidimensionales rahmenartiges Element kann hinsichtlich seines elastischen Verhaltens gut angepasst werden, um beispielsweise die Vormontage der Baugruppe zu erleichtern, und weist zudem die oben genannten Vorteile einer rahmenartigen Gestaltung auf.

Gemäß einer weiteren Weiterbildung sind die Rahmenquerabschnitte mit einer U-artigen Form ausgebildet. Bei dieser Weiterbildung gehen Enden von Armen der U-artigen Form jeweils in einen der Rahmenlängsabschnitte über. Insbesondere sind hierbei freie Endabschnitte der Schenkel der Spreizklemme bereichsweise zwischen den U-artig geformten Rahmenquerabschnitten angeordnet. Mit Hilfe der U-artigen Form können die Rahmenquerabschnitte in einer wirkungsvollen Weise mit einer Flexibilität versehen werden, die beim Vormontieren der Baugruppe mittels Zusammensetzens von Spreizklemme und Kunststoffbauteil ein elastisches Auseinanderdrücken der Rahmenlängsabschnitte ermöglicht.

Bei einer anderen Weiterbildung weist der Rahmen des Kunststoffbauteils zwei einander gegenüberliegend angeordnete der Rahmenlängsabschnitte und zwei einander gegenüberliegend angeordnete der Rahmenquerabschnitte auf, wobei die Rahmenlängsabschnitte und die Rahmenquerabschnitte einen den Rahmeninnenbereich bildenden Durchgang umgebend verbunden sind. Diese Gestaltung eignet sich beispielsweise gut, um mit einer Spreizklemme zusammenzuwirken, deren zu umgreifender Bereich in einer Draufsicht etwa ein rechteckförmiges Gebiet einnimmt.

Gemäß einer noch weiteren Weiterbildung setzen sich die Rahmenquerabschnitte in Abschlussquerwänden des Kunststoffbauteils, welche insbesondere im Wesentlichen eben ausgebildet sind, fort. Insbesondere sind bei dieser Weiterbildung freie Endabschnitte der Schenkel der Spreizklemme bereichsweise zwischen den Abschlussquerwänden angeordnet. Die Abschlussquerwände stabilisieren das Kunststoffbauteil in mechanischer Hinsicht, können zu einer zuverlässigen Führung des Kunststoffbauteils und der Baugruppe beim Einsetzen in den Aufnahmebereich beitragen, und helfen ferner etwa bei der elastischen Bewegung der Schenkel beim Einsetzvorgang das Kunststoffbauteil und die Schenkel relativ zueinander zu führen.

In einer Ausgestaltung sind die Rahmenlängsabschnitte und die Rahmenquerabschnitte einstückig miteinander verbunden. Dies kann zu einer einfachen, kosten- und aufwandsparenden Herstellung des Kunststoffbauteils beitragen. Ein derartiges Kunststoffbauteil ist zudem vorteilhaft stabil und robust, was sich im Einsatz der Baugruppe als vorteilhaft erweisen kann.

In einer Ausgestaltung ist vorgesehen, dass die Rahmenlängsabschnitte jeweils im Wesentlichen geradlinig verlaufen und/oder die Rahmenlängsabschnitte jeweils zu dem Rahmeninnenbereich hin vorstehende Rippen aufweisen, oder dass die Rahmenlängsabschnitte jeweils zu dem Rahmeninnenbereich hin gewellt ausgebildet sind. Geradlinig verlaufende Rahmenlängsabschnitte ermöglichen eine relativ einfache Gestaltung des Kunststoffbauteils, während mit Hilfe der vorstehenden Rippen das Kunststoffbauteil zum Beispiel einfacher in spielarmer oder vorgespannter Weise an der Spreizklemme gehalten werden kann. Mittels gewellt ausgebildeter Rahmenlängsabschnitte kann ferner deren elastische Verformbarkeit in einer Richtung quer zu den Rahmenlängsabschnitten verbessert und das Kunststoffbauteil leichter an der Spreizklemme zur Bildung der Baugruppe vormontiert werden.

Gemäß einer Ausgestaltung ist das Kunststoffbauteil mit einer Rasteinrichtung oder mit Rasteinrichtungen, insbesondere einem oder mehreren Rasthaken, versehen, wobei mittels der Rasteinrichtung(en) das Kunststoffbauteil rastend mit der Spreizklemme verbunden ist. Dies ermöglicht einen einfachen und schnellen Zusammenbau der Baugruppe mittels Aufklipsens des Kunststoffbauteils auf die Spreizklemme. Zudem kann bzw. können derartige Rasteinrichtung(en) einfach und zweckmäßig bei der Herstellung des Kunststoffbauteils ausgebildet werden.

In einer Ausgestaltung sind die Rahmenlängsabschnitte jeweils mit mindestens einem Rasthaken ausgebildet, wobei das Kunststoffbauteil mittels der Rasthaken rastend mit der Spreizklemme verbunden ist. Der Zusammenbau der Baugruppe gelingt somit in besonders einfacher Weise.

Insbesondere sind die Schenkel der Spreizklemme für einen zusätzlich formschlüssigen Eingriff in den Aufnahmebereich der Befestigungsschiene ausgebildet. Dies ermöglicht nach dem Spreizen der Schenkel eine zuverlässige und belastbare Verbindung der Spreizklemme mit der Befestigungsschiene mittels Kraft- und Formschluss.

Gemäß einer Ausgestaltung weisen die Schenkel der Spreizklemme jeweils eine nach außen geöffnete erste Nut zur mindestens abschnittsweisen Aufnahme eines in den Aufnahmebereich vorspringenden Querschnittsbereichs der Befestigungsschiene auf. Bei dieser Ausgestaltung sind die Schenkel jeweils mit einer nach außen geöffneten zweiten Nut, in der das Kunststoffbauteil abschnittsweise aufgenommen ist, ausgebildet. Hierbei kann insbesondere vorgesehen sein, dass die erste und zweite Nut durch einen nach außen vorspringenden Flansch jeweils des Schenkels voneinander abgegrenzt sind. Auf diese Weise kann der formschlüssige Eingriff und insbesondere die zuverlässige, formschlüssige Fixierung der Spreizklemme in dem Aufnahmebereich durch das Spreizen der Schenkel mit Hilfe der ersten Nut implementiert werden. Zugleich kann das Kunststoffbauteil zuverlässig mittels der zweiten Nut an den Schenkeln gehalten werden. Indem die ersten und zweiten Nuten nach außen geöffnet sind, kann in zweckmäßiger Weise sichergestellt werden, dass nach Einsetzen der Schenkel und des Kunststoffbauteils in den Aufnahmebereich das Kunststoffbauteil in den Berührungsbereichen mit der Befestigungsschiene in Kontakt steht und eine direkte Berührung der Schenkel mit den vorspringenden Querschnittsbereichen verhindert, wobei in diesem Zustand die vorspringenden Querschnittsbereiche gleichwohl bereits, jedoch mit einem Abstand, in den ersten Nuten aufgenommen sind. Somit ist ein leichtes Gleiten möglich, solange die Spreizklemme nicht gegen die Befestigungsschiene verspannt ist. Zugleich ist der Weg, den freie Enden der Schenkel für die abschließende klemmende Fixierung beim Aufspreizen zurücklegen müssen, gering. Auch wird bei dieser Anordnung vermieden, dass das Kunststoffbauteil eine Bewegung der Schenkel im Sinne eines elastischen Zusammendrückens dieser für ein Einrasten in den Aufnahmebereich behindert. Der Flansch zwischen der ersten und zweiten Nut trägt zu einer guten Abgrenzung der Nuten voneinander bei und kann ferner als eine Auflage für das Kunststoffbauteil dienen.

Gemäß einer anderen Ausgestaltung weisen die Schenkel der Spreizklemme jeweils einen außenseitigen Rücksprung zum mindestens abschnittsweisen Hintergreifen eines in den Aufnahmebereich vorspringenden Querschnittsbereichs der Befestigungsschiene auf. Bei dieser Ausgestaltung sind die Schenkel jeweils mit einer nach außen geöffneten Nut, in der das Kunststoffbauteil abschnittsweise aufgenommen ist, ausgebildet. Hierbei kann insbesondere vorgesehen sein, dass die Nut an einer von dem außenseitigen Rücksprung abgewandten Seite dieser durch einen nach außen vorspringenden Flansch jeweils des Schenkels begrenzt ist. Auch auf diese Weise gelingt ein zuverlässiges Hintergreifen der vorspringenden Querschnittsbereiche und eine zuverlässige Fixierung der Spreizklemme an der Befestigungsschiene. Wiederum kann das Kunststoffbauteil mit Hilfe der nach außen geöffneten Nut zuverlässig an der Spreizklemme gehalten werden, wobei wiederum in einfacher Weise sichergestellt werden kann, dass das Kunststoffbauteil in den Berührungsbereichen die Befestigungsschiene kontaktiert und somit die direkte Berührung dieser mit den Schenkeln verhindert. Der Flansch kann ferner eine Anlagefläche für das Kunststoffbauteil bereitstellen, die zuverlässig dafür sorgt, dass die Schenkel relativ zum Kunststoffbauteil nicht zu weit in den Aufnahmebereich hinein gelangen. Auch bei dieser Ausgestaltung ist ein ungehindertes Zusammendrücken der Schenkel aufeinander zu beim Einsetzen der Schenkel in den Aufnahmebereich sichergestellt. Der Flansch kann in einigen Varianten dieser Ausgestaltung alternativ weggelassen werden.

In einer Ausgestaltung ist das Kunststoffbauteil in entgegengesetzten Randbereichen desselben, die in dem in den Aufnahmebereich der Befestigungsschiene eingesetzten Zustand in einer Querrichtung des Aufnahmebereichs jeweils nach außen weisen, jeweils mit einer vorspringenden Rastnase für einen rastenden Eingriff in die Befestigungsschiene zur Führung des Kunststoffbauteils in einer Tiefenrichtung des Aufnahmebereichs und mit einer der Rastnase gegenüberliegend angeordneten Gegenlagerfläche ausgebildet. Insbesondere ist hierbei die Rastnase jeweils für ein Zusammenwirken mit einem Hinterschnitt der Befestigungsschiene, vorzugsweise einem durch die Schenkel der Spreizklemme jeweils formschlüssig hintergreifbaren Hinterschnitt, ausgebildet. Auf diese Weise kann das Kunststoffbauteil und somit, zumal eine direkte Berührung der Schenkel mit der Befestigungsschiene unterbunden wird, die Baugruppe nach dem Einrasten in den Aufnahmebereich und vor dem Aufspreizen in definierter Weise an der Befestigungsschiene gehalten werden.

In einer Weiterbildung sind die Rastnasen an den Armen der U-artigen Form der Rahmenquerabschnitte oder an den Abschlussquerwänden ausgebildet. Jene Abschnitte, an denen die Rastnasen angeordnet sind, behindern somit die elastische Spreizbewegung der Schenkel nicht. Eine derartige Bewegung ist zwischen den mit der U-artigen Form ausgebildeten Rahmenquerabschnitten oder den Abschlussquerwänden zur abschließenden Fixierung ungehindert möglich.

Bei einer Ausgestaltung sind die Schenkel und das Kunststoffbauteil zumindest vor dem Einsetzen in den Aufnahmebereich mit Spiel aneinander gehalten. Dies kann eine Beweglichkeit von Kunststoffbauteil und Schenkeln zueinander in geringem Maße ermöglichen, die jedoch in der Weise begrenzt ist, dass stets eine direkte Berührung der Schenkel mit der Befestigungsschiene vor dem Aufspreizen unterbunden wird.

Bei einer anderen, alternativen Ausgestaltung sind die Schenkel und das Kunststoffbauteil vor dem Einsetzen in den Aufnahmebereich spielfrei aneinander gehalten und können insbesondere eine elastische Vorspannung gegeneinander aufweisen. Auf diese Weise kann beispielsweise ein Zentrieren des Kunststoffbauteils an der Spreizklemme erreicht werden. Insbesondere kann, wenn eine elastische Vorspannung vorgesehen ist, das Einsetzen oder Einrasten der Spreizklemme in der Befestigungsschiene, durch das Einfügen der Schenkel und des Kunststoffbauteils in den Aufnahmebereich, auf diese Weise etwas leichtgängiger gestaltet werden.

Gemäß einer Ausgestaltung sind die Schenkel der Spreizklemme durch einen Zwischenabschnitt miteinander verbunden, wobei der Zwischenabschnitt der Spreizklemme eine Durchgangsöffnung zur abschnittsweisen Aufnahme eines Spreizelements, insbesondere einer Schraube, mittels desselben die Schenkel spreizbar sind, aufweist. Die Baugruppe und das Spreizelement können somit gut vormontiert werden, zudem ist das Spreizelement an der Spreizklemme für das Spreizen der Schenkel geführt.

In einer bevorzugten Ausgestaltung ist die Spreizklemme aus oder mit einem Metallmaterial, vorzugsweise einem Aluminiummaterial, wie etwa Aluminium oder einer Aluminiumlegierung, ausgebildet. Eine derartige Spreizklemme ist robust und stabil. Insbesondere kann hierbei die Spreizklemme als ein aus dem Metallmaterial mittels eines Fertigungsverfahrens umfassend Strangpressen und Ablängen gebildeter Körper oder mit einem derartigen Körper ausgebildet sein. Eine stabile, dauerhafte Spreizklemme ist in dieser Weise zweckmäßig herstellbar.

Gemäß einer bevorzugten Weiterbildung ist das Kunststoffbauteil mit einem thermoplastischen Kunststoff, insbesondere mit einem Polyoxymethylen, ausgebildet. Bauteile aus thermoplastischen Kunststoffen können auch mit komplexer Geometrie in wirtschaftlicher Weise hergestellt werden, beispielsweise spritzgegossen werden. Polyoxymethylen besitzt eine Reihe vorteilhafter Eigenschaften, hat insbesondere eine erhebliche Festigkeit und gute Gleiteigenschaften.

In einer weiteren Weiterbildung ist das Kunststoffbauteil mittels Spritzgießens gefertigt. Somit gelingt eine rationelle Fertigung des Kunststoffbauteils.

In einer Ausgestaltung sind die Spreizklemme und das Kunststoffbauteil jeweils in Bezug auf eine Längsmittelebene dieser im Wesentlichen achsensymmetrisch ausgebildet. Dies erleichtert beispielsweise die Vormontage und Anwendung.

In einer Ausgestaltung sind das Montageelement und die Spreizklemme mittels einer zwischen diesen angeordneten Feder gegeneinander vorspannbar oder vorgespannt. Insbesondere ist hierbei die Feder die Schraube umgebend angeordnet. Mit Hilfe der Feder kann die Handhabung der vormontierten Klemmvorrichtung noch weiter erleichtert werden, indem das Montageelement beispielsweise relativ zu der Spreizklemme in einer definierten Ausgangsposition gehalten werden kann.

Insbesondere ist die Befestigungsschiene aus einem Metallmaterial, beispielsweise aus Aluminium oder einer Aluminiumlegierung, gefertigt. Die Befestigungsschiene kann insbesondere als ein stranggepresstes Profil ausgebildet sein. Derartige Schienen sind stabil und zweckmäßig herstellbar.

Insbesondere sind die Baugruppe, die Klemmvorrichtung und die Befestigungsanordnung zur Befestigung eines Photovoltaikmoduls im Bereich eines Gebäudedachs vorgesehen.

Die obigen Ausgestaltungen und Weiterbildungen der Erfindung lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

Insbesondere können die obigen Ausgestaltungen und Weiterbildungen jeweils in analoger Weise auf die Baugruppe, die Klemmvorrichtung und die Befestigungsanordnung der vorliegenden Erfindung Anwendung finden.

### INHALTSANGABE DER ZEICHNUNG

Die Erfindung wird nachfolgend anhand der in den schematischen Figuren angegebenen Ausführungsbeispiele näher erläutert. Hierbei zeigen:
- Fig. 1: eine perspektivische Teilansicht eines beispielhaften Gebäudes mit einem Gebäudedach und einigen beispielhaften, auf dem Gebäudedach mittels einer Befestigungsanordnung gemäß Ausführungsbeispielen der Erfindung befestigten Photovoltaikmodulen;
- Fig. 2: eine Befestigungsschiene zur Verwendung in einer Befestigungsanordnung gemäß einem Ausführungsbeispiel, in einer Querschnittsansicht;
- Fig. 3: eine Klemmvorrichtung gemäß einem ersten Ausführungsbeispiel, in einer Vorderansicht;
- Fig. 4: die Klemmvorrichtung der Fig. 3, in einer Seitenansicht;
- Fig. 5: eine Baugruppe der Klemmvorrichtung der Fig. 3, in einer perspektivischen Ansicht;
- Fig. 6: die Baugruppe der Fig. 5, in einer Seitenansicht;
- Fig. 7: die Baugruppe der Fig. 5, in einer Vorderansicht;
- Fig. 8: eine Spreizklemme der Baugruppe der Fig. 5, in einer perspektivischen Ansicht;
- Fig. 9: die Spreizklemme der Fig. 8, in einer Vorderansicht;
- Fig. 10: ein Kunststoffbauteil der Baugruppe der Fig. 5, in einer perspektivischen Ansicht;
- Fig. 11: das Kunststoffbauteil der Fig. 10, in einer Ansicht in einem Längsschnitt XI-XI;
- Fig. 12: das Kunststoffbauteil der Fig. 10, in einer Vorderansicht;
- Fig. 13: eine erste Variante des in Fig. 10 gezeigten Kunststoffbauteils, in einer Draufsicht;
- Fig. 14: eine zweite Variante des in Fig. 10 gezeigten Kunststoffbauteils, in einer Draufsicht;
- Fig. 15: eine Befestigungsanordnung gemäß dem ersten Ausführungsbeispiel im Zusammenwirken mit einem Rahmenelement eines Photovoltaikmoduls eines ersten Typs, in einer Vorderansicht der Klemmvorrichtung sowie einer Querschnittsansicht einer Befestigungsschiene;
- Fig. 16: ein Detail XVI aus Fig. 15;
- Fig. 17: die Situation der Fig. 15 in einer Seitenansicht;
- Fig. 18: ein Detail XVIII aus Fig. 17;
- Fig. 19: die Befestigungsanordnung gemäß dem ersten Ausführungsbeispiel im Zusammenwirkung mit einem Rahmenelement eines Photovoltaikmoduls eines zweiten Typs, in einer Vorderansicht der Klemmvorrichtung sowie einer Querschnittsansicht einer Befestigungsschiene;
- Fig. 20: die Situation der Fig. 19 in einer Seitenansicht;
- Fig. 21: eine Klemmvorrichtung gemäß einer Variante des ersten Ausführungsbeispiels, in einer Seitenansicht;
- Fig. 22: die Klemmvorrichtung der Fig. 21 in einer Vorderansicht;
- Fig. 23: eine Befestigungsanordnung mit der Klemmvorrichtung der Fig. 21 im Zusammenwirken mit Rahmenelementen zweier Photovoltaikmodule des zweiten Typs, in einer Seitenansicht;
- Fig. 24: eine Klemmvorrichtung gemäß einem zweiten Ausführungsbeispiel, in einer Vorderansicht;
- Fig. 25: die Klemmvorrichtung der Fig. 24 in einer Seitenansicht;
- Fig. 26: eine Baugruppe der Klemmvorrichtung der Fig. 24, in einer perspektivischen Ansicht;
- Fig. 27: eine Spreizklemme der Baugruppe der Fig. 26, in einer perspektivischen Ansicht;
- Fig. 28: die Spreizklemme der Fig. 27, in einer Vorderansicht;
- Fig. 29: ein Kunststoffbauteil der Baugruppe der Fig. 26, in einer perspektivischen Ansicht;
- Fig. 30: das Kunststoffbauteil der Fig. 29, in einer Seitenansicht;
- Fig. 31: das Kunststoffbauteil der Fig. 29, in einer Vorderansicht;
- Fig. 32: die Baugruppe der Fig. 26, eingesetzt in eine Befestigungsschiene eines ersten Typs entsprechend der Befestigungsschiene aus Fig. 2, jedoch noch nicht gegen die Befestigungsschiene verspannt, in einer Vorderansicht;
- Fig. 33: die Baugruppe der Fig. 26, eingesetzt in eine Befestigungsschiene eines zweiten Typs, jedoch noch nicht gegen die Befestigungsschiene verspannt, in einer Vorderansicht;
- Fig. 34: die Situation der Fig. 33 in einer Seitenansicht;
- Fig. 35: eine Befestigungsanordnung gemäß dem zweiten Ausführungsbeispiel im Zusammenwirkung mit dem Rahmenelement des Photovoltaikmoduls des zweiten Typs, in einer Vorderansicht;
- Fig. 36: die Situation der Fig. 35 in einer Seitenansicht;
- Fig. 37: die Befestigungsanordnung gemäß dem zweiten Ausführungsbeispiel im Zusammenwirken mit dem Rahmenelement des Photovoltaikmoduls des ersten Typs, in einer Vorderansicht; und
- Fig. 38: die Situation der Fig. 37 in einer Seitenansicht.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren sind gleiche, funktionsgleiche und gleich wirkende Elemente, Merkmale und Komponenten - sofern nichts anderes angegeben ist - jeweils mit denselben Bezugszeichen versehen.

### BESCHREIBUNG VON AUSFÜHRUNGSBEISPIELEN

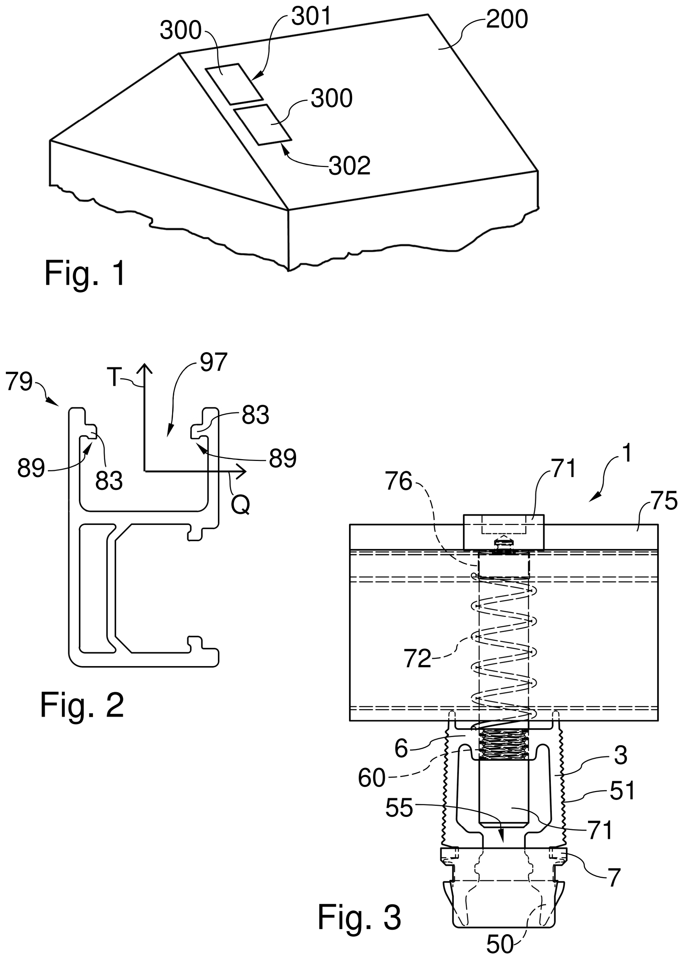

Fig. 1 zeigt in schematisch vereinfachter Weise einen Teil eines Gebäudes, mit einem Gebäudedach 200. Auf dem Gebäudedach 200 ist eine Vielzahl von Photovoltaikmodulen 300 zur Gewinnung elektrischer Energie aus Sonneneinstrahlung angeordnet, wobei in Fig. 1 zur Illustration lediglich zwei Module 300 vereinfacht dargestellt sind. In Fig. 1 sind die Photovoltaikmodule 300 beispielhaft mit einer im Wesentlichen rechteckigen Grundform ausgebildet. Die zur Gewinnung der elektrischen Energie wirksamen Bauteile des Photovoltaikmoduls 300 und weitere Bauteile desselben sind hierbei zu deren Schutz und zum Zweck einer mechanischen Halterung des Moduls 300 von randlich angeordneten Rahmenabschnitten 301, 302 umgeben, die wiederum mit beispielsweise profilartigen Rahmenelementen gebildet sind.

Die Photovoltaikmodule 300 der Fig. 1 sind unter Verwendung einer Befestigungsanordnung gemäß einem der nachfolgend beschriebenen Ausführungsbeispiele der Erfindung, beispielsweise nachfolgend beschriebenen Befestigungsanordnungen 100, 100a oder 100' oder deren nachstehend beschriebener Varianten oder einer Kombination dieser Befestigungsanordnungen, im Bereich des Gehäusedachs 200 befestigt. Hierzu weist die Befestigungsanordnung 100, 100a oder 100' Befestigungsschienen 79 oder 79a oder eine Kombination dieser auf, die im Bereich des Gebäudedaches 200 fixiert sind. Zudem weist die Befestigungsanordnung 100, 100a oder 100' eine oder bevorzugt mehrere nachfolgend näher beschriebene Klemmvorrichtungen 1, 1a bzw. 1' auf. Es versteht sich, dass in einer Befestigungsanordnung zur Befestigung der Module 300 auf dem Gebäudedach 200 nicht nur mehrere Befestigungsschienen 79, 79a gleichen oder unterschiedlichen Typs, sondern auch mehrere Klemmvorrichtungen gleichen oder unterschiedlichen Typs, etwa mehrere Klemmvorrichtungen vom Typ "Endklemme", wie etwa die Klemmvorrichtung 1, 1', und/oder mehrere Klemmvorrichtungen vom Typ "Mittelklemme", wie etwa die Klemmvorrichtung 1a oder eine analog dieser mit einer nachstehend noch beschriebenen Baugruppe 2' gebildete Klemmvorrichtung, verwendet werden können.

Die Photovoltaikmodule 300 sind mittels der Klemmvorrichtungen, die nachstehend näher beschrieben sind und von welchen die Klemmvorrichtungen 1, 1a und 1' in den Figuren illusttiert sind, an den Befestigungsschienen 79 und/oder 79a klemmend befestigt.

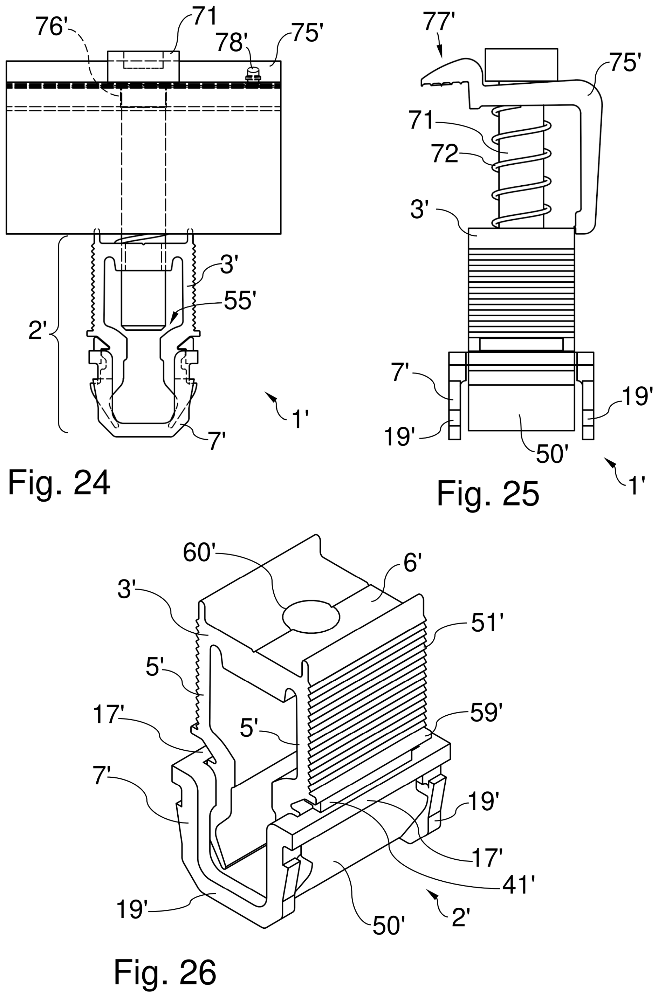

Die Klemmvorrichtungen 1, 1a und eine Baugruppe 2 für diese, sowie die beispielhaften Befestigungsanordnungen 100, 100a, sind gemäß einem ersten Ausführungsbeispiel und einer Variante desselben in Fig. 2-23 illustriert. Fig. 24-38 illustrieren eine Klemmvorrichtung 1', eine Baugruppe 2' für diese, und Befestigungsanordnungen 100', gemäß einem zweiten Ausführungsbeispiel.

In Fig. 2 ist die Befestigungsschiene 79 im Querschnitt dargestellt. Die Befestigungsschiene 79 ist als ein stranggepresstes Profil aus einem Metallmaterial, insbesondere aus Aluminium oder aus einer Aluminiumlegierung, ausgebildet und weist einen kanalartigen Aufnahmebereich 97 auf, der in Fig. 2 nach oben geöffnet ist.

Bei der in Fig. 2 gezeigten Bauform der Befestigungsschiene 79 weist diese zudem unterhalb des Aufnahmebereichs 97 einen im Wesentlichen gleichartig ausgebildeten, senkrecht zu dem Aufnahmebereich 97 ausgerichteten weiteren Aufnahmebereich, in Fig. 2 nicht bezeichnet, auf, jedoch sind Befestigungsschienen ohne den zweiten Aufnahmebereich gleichermaßen denkbar.

Der Aufnahmebereich 97 ist durch einen Boden und im Wesentlichen parallel zueinander verlaufende Seitenwände begrenzt und weist einen im Wesentlichen rechteckigen Querschnitt auf, in dem von den Seitenwänden ausgehend rippenartig ausgebildete Querschnittsbereiche 83 in den Aufnahmebereich 97 hinein vorspringen. Die Querschnittsbereiche 83 bilden auf diese Weise Hinterschnitte 89 der Befestigungsschiene 79 aus. Der Aufnahmebereich 97 ist in Bezug auf eine Tiefenrichtung T desselben im Querschnitt im Wesentlichen achsensymmetrisch ausgebildet. Fig. 2 zeigt ferner eine Querrichtung Q des Aufnahmebereichs 97, die zu dessen Tiefenrichtung T quer, insbesondere im Wesentlichen orthogonal, verläuft.

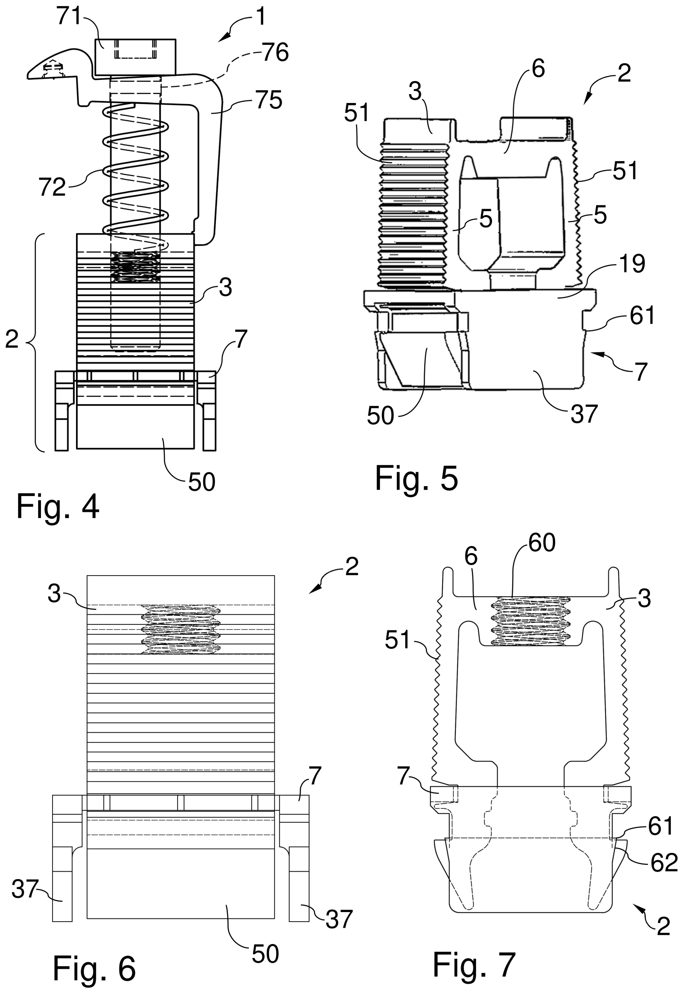

Fig. 3 und 4 zeigen eine Klemmvorrichtung 1 gemäß dem ersten Ausführungsbeispiel. Die Klemmvorrichtung 1 ist derart ausgebildet, dass sie an der Befestigungsschiene 79 stabil und zuverlässig in klemmender Weise fixiert werden kann und hierbei zugleich eine in Fig. 3, 4 nicht gezeigte Komponente, beispielsweise das Photovoltaikmodul 300, klemmend an der Befestigungsschiene 79 befestigt.

Die Klemmvorrichtung 1 umfasst eine Baugruppe 2, die in den Fig. 5 bis 7 separat dargestellt ist, ein Montageelement 75, ein als eine Schraube 71 ausgebildetes Spreiz- und Kopplungselement, das die Baugruppe 2 mit dem Montageelement 75 koppelt, und eine die Schraube 71 in deren Umfangsrichtung umgebend angeordnete Feder 72.

Das Montageelement 75 weist eine Grundform auf, die in einem in Fig. 4 sichtbaren Querschnitt desselben im Wesentlichen nach Art eines L-Winkels ausgebildet ist, und dient insbesondere dazu, mit der zu befestigenden Komponente in deren Randbereich in Kontakt zu gelangen, um die Komponente gegen die Befestigungsschiene 79 zu klemmen.

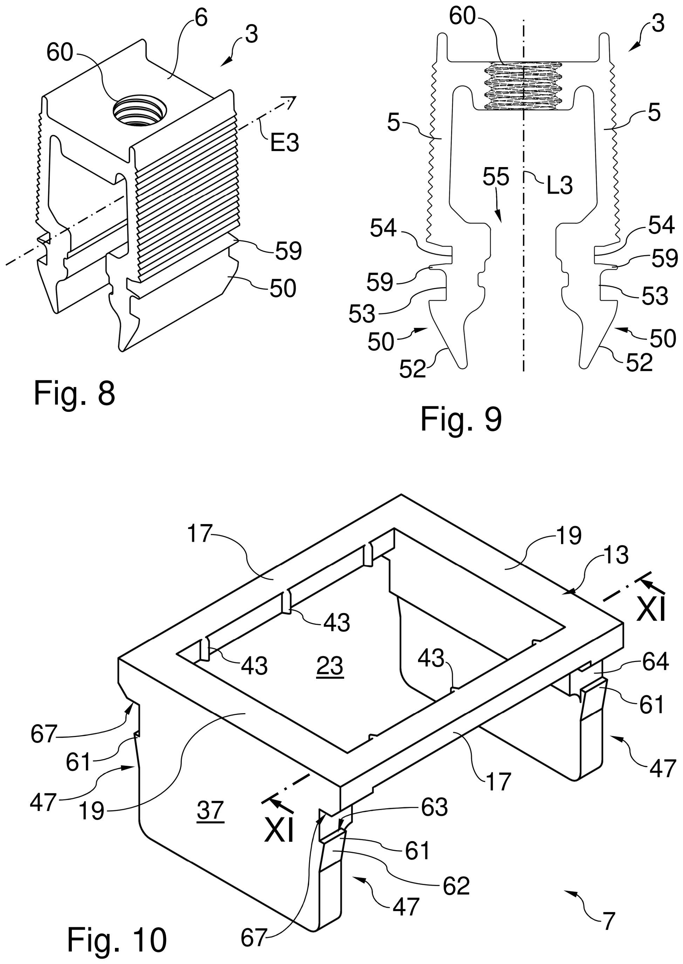

Fig. 5 bis 7 zeigen, dass die Baugruppe 2 mit einer Spreizklemme 3 und einem an der Spreizklemme 3 gehaltenen Kunststoffbauteil 7 gebildet ist. Fig. 8 und 9 zeigen die Spreizklemme 3 separat, Fig. 10 bis 12 das Kunststoffbauteil 7.

Die Spreizklemme 3 ist aus einem stranggepressten Profil aus einem Metallmaterial, insbesondere aus Aluminium oder einer Aluminiumlegierung, hergestellt. Hierzu werden Stücke definierter Länge von dem stranggepressten Profil abgeschnitten, die jeweils den Körper einer Spreizklemme 3 bilden.

In einem Querschnitt ist die Spreizklemme 3 in Bezug auf eine Längsmittelebene L3 derselben im Wesentlichen achsensymmetrisch ausgebildet. Symmetrisch zu der Längsmittelebene L3 weist die Spreizklemme 3 zwei Schenkel 5 auf, die einem Ende, in Fig. 9 dem oberen Ende, der Spreizklemme 3 benachbart durch einen Zwischenabschnitt 6, der plattenartig und im Wesentlichen quer zu den Schenkeln 5 ausgebildet ist, einstückig miteinander verbunden sind. In Bezug auf die Längsmittelebene L3 außenseitig sind die Schenkel 5 bereichsweise mit einer Riffelung 51 versehen. Die Schenkel 5 und die Positionierung des Zwischenabschnitts 6 nahe deren oberem Ende tragen dazu bei, die durch deren Ausbildung aus dem Metallmaterial relativ steife Spreizklemme 3 zu einem gewissen Grad mit einer Elastizität zu versehen.

Im Wesentlichen in der Mitte des Zwischenabschnitts 6 ist dieser mit einer Durchgangsöffnung 60 versehen, die als eine mit einem Innengewinde versehene Durchgangsbohrung ausgebildet ist und in die die Schraube 71 eingeschraubt werden kann. Im zusammengebauten Zustand der Klemmvorrichtung 1, siehe Fig. 3 und 4, ist somit die Schraube 71 abschnittsweise in der Durchgangsöffnung 60 aufgenommen. Die als Gewindebohrung ausgeführte Durchgangsöffnung 60 kann vor oder nach dem Ablängen des stranggepressten Profils, aus dem der Körper der Spreizklemme 3 gebildet ist, in den Zwischenabschnitt 60 eingebracht werden, etwa durch Bohren und nachfolgendes Gewindeschneiden.

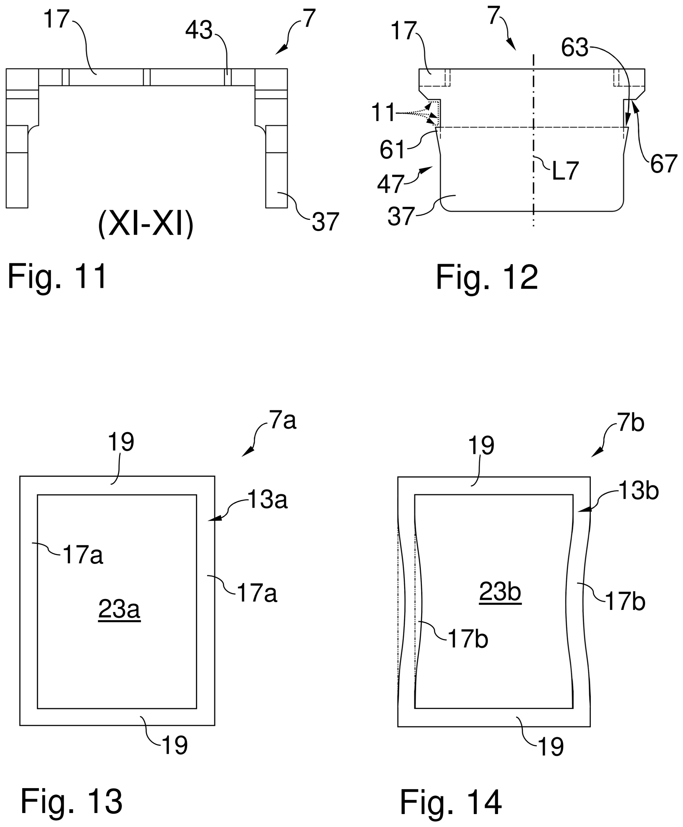

Das Kunststoffbauteil 7 ist aus einem thermoplastischen Kunststoff, insbesondere einem Polyoxymethylen, das mit POM abgekürzt beschrieben wird und auch als Polyacetal bezeichnet wird, spritzgegossen. In Bezug auf eine Längsmittelebene L7 des Kunststoffbauteils 7, siehe Fig. 12, ist das Kunststoffbauteil 7 im Wesentlichen achsensymmetrisch ausgebildet. Das Kunststoffbauteil 7 ist einstückig als ein Kunststoffclip ausgebildet, der im zusammengebauten Zustand der Baugruppe 2 die Schenkel 5 der Spreizklemme 3 gemeinsam umgreift.

Um die Schenkel 5 zu umgreifen, ist das Kunststoffbauteil 7 mit einem Rahmen 13 gebildet. Der Rahmen 13 ist mit zwei einander gegenüberliegend angeordneten Rahmenlängsabschnitten 17 und zwei einander gegenüberliegend angeordneten Rahmenquerabschnitten 19 ausgebildet, die einen im Wesentlichen rechteckigen Durchgang als einen Rahmeninnenbereich 23 des Rahmens 13 umgeben. Die Rahmenlängsabschnitte 17 und die Rahmenquerabschnitte 19 sind hierbei einstückig miteinander verbunden. Nach Zusammenbau der Baugruppe 2 sind die Schenkel 5 gemeinsam jeweils abschnittsweise in dem Rahmeninnenbereich 23 aufgenommen.

Die Rahmenquerabschnitte 19 und die Rahmenlängsabschnitte 17 verlaufen jeweils im Wesentlichen geradlinig. Hierbei setzen sich die Rahmenquerabschnitte 19 in im Wesentlichen eben ausgebildeten Abschlussquerwänden 37 einstückig fort. Nach Zusammenbau der Baugruppe 2 sind freie, von dem Zwischenabschnitt 6 entfernt angeordnete Endabschnitte 50 der Schenkel 5 bereichsweise zwischen den Abschlussquerwänden 37 angeordnet, siehe zum Beispiel Fig. 4 und 6.

Von jedem der beiden Rahmenlängsabschnitte 17 stehen zu dem Rahmeninnenbereich 23 mehrere, bei dem in Fig. 10-12 gezeigten Ausführungsbeispiel drei, Rippen 43 vor. Die Rippen 43 können sich zu deren jeweils freiem Ende hin verjüngen. Insbesondere kann das freie Ende der Rippen 43 jeweils spitz ausgebildet sein. Die Rippen 43, der Rahmeninnenbereich 23 und die Spreizklemme 3 sind hierbei vorzugsweise derart dimensioniert, dass nach dem Zusammenbau der Spreizklemme 3 mit dem Kunststoffbauteil 7 zur Bildung der Baugruppe 2 die Schenkel 5 und das Kunststoffbauteil 7 spielfrei aneinander gehalten sind. Die Rippen 43 können hierzu bei Einführung der freien Endabschnitte 50 in den Rahmeninnenbereich 23 eine plastische Verformung erfahren. Alternativ ist es jedoch auch vorstellbar, dass zumindest in einem nicht in den Aufnahmebereich 97 der Befestigungsschiene 79 eingesetzten Zustand die Spreizklemme 3 und das Kunststoffbauteil 7 mit Spiel aneinander gehalten sind. Beispielsweise können dann die Rippen 43 beim Aufspreizen der Schenkel 5 für die abschließende Fixierung an der Schiene 79 verformt werden.

Einander entgegengesetzt angeordnete seitliche Randbereiche 47 jeder der Abschlussquerwände 37, siehe beispielsweise Fig. 10, sind jeweils einstückig mit einer vorspringenden Rastnase 61 ausgebildet, wobei die Rastnase 61 eine flache Gleitrampe 62 und eine von einem freien Ende der Abschlussquerwand 37 weg und zu dem Rahmen 13 hin weisende Rückhaltefläche 63 aufweist. Insgesamt weist das Kunststoffbauteil 7 vier Rastnasen 61 auf, die an den beiden Abschlussquerwänden 37 in gleicher Weise ausgebildet sind.

Der Rastnase 61 gegenüberliegend ist an dem Kunststoffbauteil 7, mindestens in den Randbereichen 47, jeweils eine im Wesentlichen ebene Gegenlagerfläche 67 ausgebildet, die der Rückhalteflläche 63 zugewandt ist.

Ausgehend von den freien Endabschnitten 50 in Richtung zu dem Zwischenabschnitt 6 hin ist jeder der Schenkel 5 der Spreizklemme 3 an einer Außenseite, in Bezug auf die Längsmittelebene L3 gesehen, in dieser Reihenfolge mit einer in Bezug auf die Längsmittelebene L3 schräg geneigten Rampe 52, einer nach außen geöffneten ersten Nut 53, einem nach außen vorspringenden Flansch 59 und einer nach außen geöffneten zweiten Nut 54 versehen. Der Flansch 59 grenzt hierbei die erste Nut 53 von der zweiten Nut 54 ab.

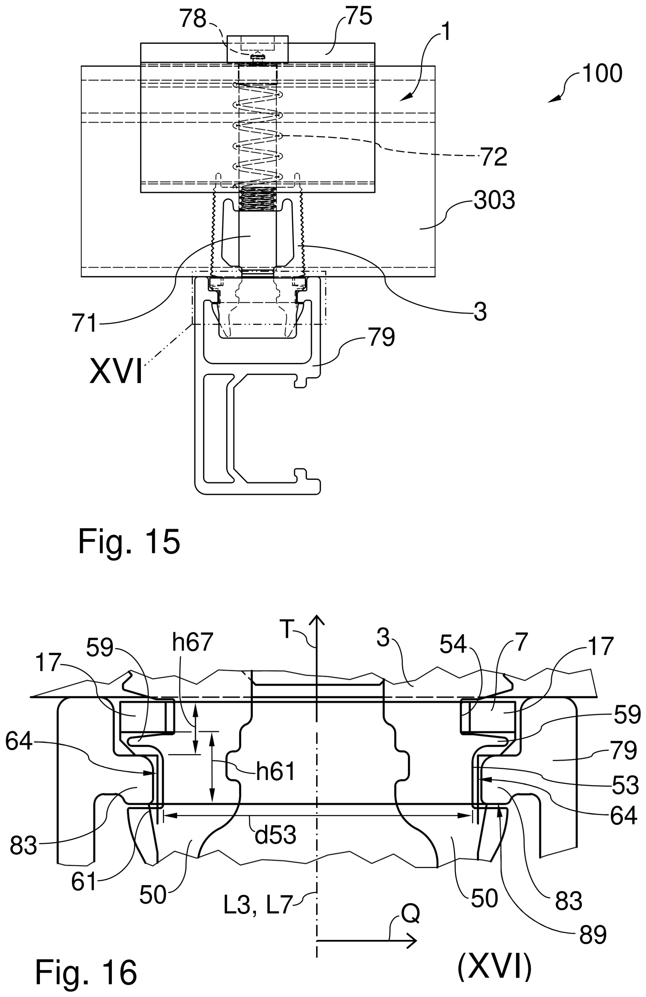

Zum Montieren der Baugruppe 2 wird die Spreizklemme 3, mit den freien Endabschnitten 50 voran, in den Rahmeninnenbereich 23 eingeführt. Die freien Endeabschnitte 50 werden hierbei durch Zusammendrücken elastisch aufeinander zu bewegt, um die Schenkel 5 so weit durch den Rahmeninnenbereich 23 hindurchführen zu können, dass die Rahmenlängsabschnitte 17 nach Wegnahme der zum Zusammendrücken aufgewandten Kraft in der zweiten Nut 54 zu liegen kommen können, siehe beispielsweise Fig. 7 und Fig. 16. In diesem Zustand ist das Kunststoffbauteil 7 formschlüssig durch Zusammenwirken der Rahmenlängsabschnitte 17 mit der zweiten Nut 54 an der Spreizklemme 3 gehalten, wobei die Rahmenlängsabschnitte 17 entlang der Extrusionsrichtung E3 der Spreizklemme 3, die Rahmenquerabschnitte 19 quer zu dieser Extrusionsrichtung E3 und im Wesentlichen parallel zu einer Bewegungsrichtung der Schenkel 5 bei deren elastischem Zusammendrücken, verlaufen.

Die Baugruppe 2 kann bereits in dem in Fig. 5 bis 7 gezeigten Zustand mit den freien Endabschnitten 50 und dem Kunststoffbauteil 7 voran in den Aufnahmebereich 97 der Befestigungsschiene 79 eingesetzt werden. Bevorzugt wird jedoch zunächst die Baugruppe 2 mit der Feder 72, der Schraube 71 und dem Montageelement 75 zur Bildung der Klemmvorrichtung 1 zusammengebaut, also vormontiert. Der Anwender kann dann die vormontierte Klemmvorrichtung 1 als Einheit in die Befestigungsschiene 79 einfügen.

Hierzu wird die Schraube 71 derart durch eine Durchgangsöffnung 76 des Montageelements 75 hindurchgeführt, dass ein Schraubenkopf an dem Montageelement 75 ansteht. Die Durchgangsöffnung 76 ist vorzugsweise eine Durchgangsbohrung ohne Gewinde. Die Feder 72 wird auf der dem Schraubenkopf gegenüberliegenden Seite auf den Schaft der Schraube 71 aufgeschoben und die Schraube 71 in die mit dem Gewinde versehene Durchgangsöffnung 60 eingeschraubt, siehe Fig. 3 und 4. Im Zustand der Fig. 3 und 4 ist die die Schraube 71 umgebende Feder 72 zwischen dem Montageelement 75 und dem Zwischenabschnitt 6 der Spreizklemme 3 angeordnet und spannt das Montageelement 75 gegen die Spreizklemme 3 elastisch vor. Das Montageelement 75 liegt somit definiert an dem Schraubenkopf an, was die Handhabung erleichtert.

Die Schraube 71 ist nicht nur für eine Verbindung von Montageelement 75 und Spreizklemme 3 und für eine Kraftaufbringung auf die zu befestigende Komponente, vermittelt über das Montageelement 75, vorgesehen, sondern dient auch als ein Spreizelement zum Auseinanderspreizen der Schenkel 5 in einer Richtung im Wesentlichen quer zu der Längsmittelebene L3. Im Zustand der Fig. 3 und 4 ist die Schraube 71 jedoch noch nicht so weit eingeschraubt, dass sie zum Spreizen wirksam werden kann. Die Schenkel 5 können daher mit genügend Kraft in der Situation der Fig. 3 und 4 quer zur Längsmittelebene L3 elastisch aufeinander zu bewegt werden.

Zur Verbindung der Klemmvorrichtung 1 mit der Befestigungsschiene 79 werden die Schenkel 5 und das Kunststoffbauteil 7, mit den freien Endabschnitten 50 voran, in den Aufnahmebereich 97 eingesetzt. Hierzu wird Kraft aufgewandt, so dass die Schenkel 5 mit Hilfe der Rampen 52 quer zur Längsmittelebene L3 elastisch zusammengedrückt werden und nach hinreichendem Einführen und elastischem Zurückfedern hinter die Hinterschnitte 89 greifen. Im vollständig eingesetzten Zustand sind, siehe Fig. 16, die rippenartigen Querschnittsbereiche 83 der Befestigungsschiene 79 jeweils bereichsweise innerhalb der ersten Nut 53 des jeweils zugeordneten Schenkels 5 aufgenommen.

Bei dem Einsetzen in die Befestigungsschiene 79 gelangen zudem die Rastnasen 61 des Kunststoffbauteils 7 in den Randbereichen 47, welche in dem in den Aufnahmebereich 97 eingesetzten Zustand in der Querrichtung Q des Aufnahmebereichs 97 jeweils nach außen weisen, rastend in Eingriff mit den Hinterschnitten 89.

Die Abmessungen der Querschnittsbereiche 83, die Positionen und Abmessungen der Nuten 53, 54 und des Flansches 59, die Abstände der Rastnasen 61 von den jeweils zugewandten Gegenlagerflächen 67 und die Abstände der Rastnasen 61 und Gegenlagerflächen 67 von den Rahmenlängsabschnitten 17, sind parallel zu den in der Baugruppe 2 im Wesentlichen miteinander zusammenfallend angeordneten Längsmittelebenen L3 und L7 und somit im eingesetzten Zustand der Klemmvorrichtung 1 im Wesentlichen parallel zu der Tiefenrichtung T des Aufnahmebereichs 97 derart gewählt, dass eine Berührung der Querschnittsbereiche 83 mit den Schenkeln 5 der Spreizklemme 3 verhindert wird. Mittels der Rastnasen 61 und der Gegenlagerflächen 67 wird somit eine Führung des Kunststoffbauteils 7 in der Tiefenrichtung T des Aufnahmebereichs 97 erreicht. Beispielhaft sind in Fig. 16 entlang der Tiefenrichtung T der Abstand h61 einer Unterkante des Rahmenlängsabschnitts 17 von der Rastnase 61 und ein Abstand h67 einer Oberkante des Rahmenlängsabschnitts 17 von der Gegenlagerfläche 67 verdeutlicht. Hierbei sind insbesondere h61 und h67 entsprechend geeignet gewählt.

Zudem ist in Richtung quer zu den Längsmittelebenen L3, L7 und somit im Wesentlichen parallel zu der Querrichtung Q ein Abstand d53 von Bodenflächen der ersten Nuten 53 relativ zu einem Abstand von jeweils zwischen der Gegenlagerfläche 67 und der Rastnase 61 befindlichen, schmalseitigen Außenflächenbereichen 64 der Abschlusswand 37 geringer gewählt.

Durch den Kontakt des Kunststoffbauteils 7 mit der Befestigungsschiene 79 in Berührungsbereichen 11, siehe auch Fig. 12, kann somit die direkte Berührung der Schenkel 5 mit der Schiene 79, insbesondere mit den den Schenkeln 5 benachbarten Querschnittsabschnitten 83, sowohl in der Tiefenrichtung T als auch in der Querrichtung Q und damit in zwei quer zueinander verlaufenden Richtungen verhindert werden, bevor die Schenkel 5 für das Klemmen der Spreizklemme 3 an der Befestigungsschiene 79 gespreizt werden.

Auf diese Weise verhindert das Kunststoffbauteil 7 durch Berührung mit den Querschnittsbereichen 83 einen Kontakt der metallischen Spreizklemme 3 mit der ebenfalls metallischen Befestigungsschiene 79. Hierfür wird eine präzise Positionierung des Kunststoffbauteils 7 an der Spreizklemme 3 mit Hilfe der Rahmenlängsabschnitte 17, der zweiten Nuten 54 und der Flansche 59 erreicht.

Die Berührungsbereiche 11 des Kunststoffbauteils 7, siehe insbesondere Fig. 12, sind somit derart angeordnet, dass nach dem Einsetzen der Schenkel 5 und des Kunststoffbauteils 7 in den Aufnahmebereich 97 durch einen Kontakt des Kunststoffbauteils 7 mit der Befestigungsschiene 79 in den Berührungsbereichen 11 eine direkte Berührung der Schenkel 5 mit diesen jeweils benachbarten Abschnitten der Befestigungsschiene 79, insbesondere den Querschnittsbereichen 83 dieser, verhindert wird, bevor die Schenkel 5, wie nachstehend noch näher beschrieben, zum Klemmen der Spreizklemme 3 an der Befestigungsschiene 79 gespreizt werden.

Die Berührungsbereiche 11 des Kunststoffbauteils 7 wirken vor dem Anziehen der Schraube 71 und damit dem Spreizen der Schenkel 5 jeweils als Gleitflächen und ermöglichen vorteilhaft ein gleitendes, leichtgängiges, Verschieben der Baugruppe 2 und somit der Klemmvorrichtung 1 entlang der Befestigungsschiene 79. Der zwischen dem Kunststoffbauteil 7 und der metallischen Befestigungsschiene 79 vorgesehene Gleitkontakt von Kunststoff auf Metall ermöglicht geringe Reibung und vermeidet ein unerwünscht schwergängiges oder stockendes Verschieben sowie ein die Verschiebebewegung hinderndes Zusammenwirken insbesondere von quer zur Schieberichtung verlaufenden Kanten der Spreizklemme 3 mit der Befestigungsschiene 79. Dies ermöglicht eine einfache, rasche und angenehme Handhabung der Klemmvorrichtung 1 durch die Monteursperson und erleichtert eine präzise Positionierung der Klemmvorrichtung 1 an der Schiene 79.

Zur abschließenden festen Fixierung der Spreizklemme 3 an der Befestigungsschiene 79, und zugleich zum klemmenden Befestigen einer zu befestigenden Komponente, wird die Schraube 71 weiter in die Durchgangsöffnung 60 eingeschraubt. Der Schaft der Schraube 71 oder zumindest dessen freier Endbereich gelangt hierdurch in einen verengten Zwischenraum 55 zwischen den Schenkeln 5 und spreizt die Schenkel 5 in Querrichtung Q auseinander. Die bereits in den Aufnahmebereich 97 eingreifenden Schenkel 5, deren Kontakt mit der metallischen Schiene 79 durch das Kunststoffbauteil 7 bisher verhindert wurde, gelangen hierdurch formschlüssig in Oberflächenkontakt mit den Querschnittsbereichen 83 und können durch das Anziehen der Schraube 71 fest und stabil gegen die Befestigungsschiene 79 verspannt werden, so dass ein Kraft- und Formschluss zur Befestigung erzielt wird.

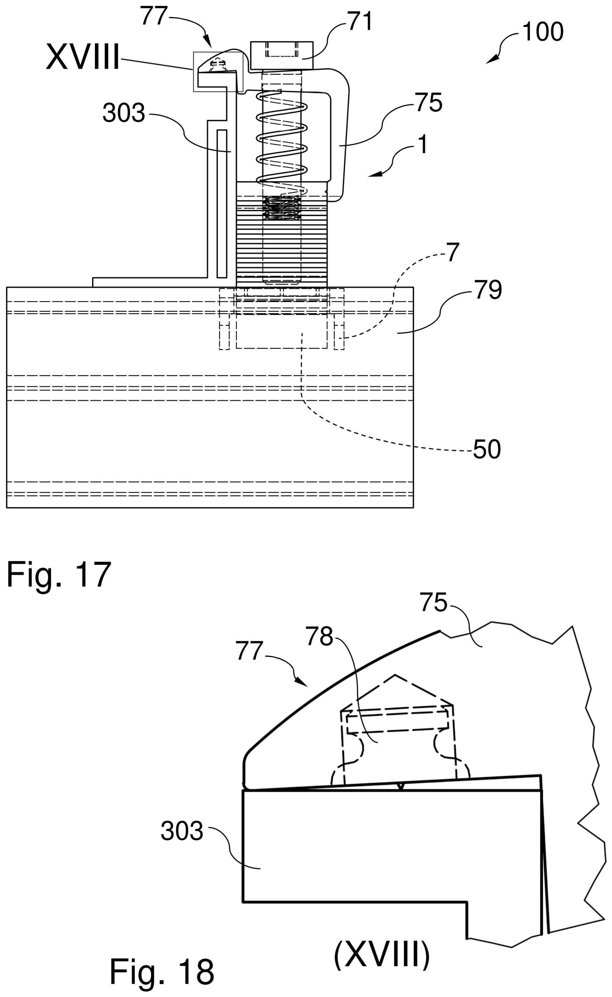

Fig. 15 und 17 illustrieren das Klemmen eines Rahmenelements 303 eines Photovoltaikmoduls 300 eines ersten Typs an der Befestigungsschiene 79 mittels der Klemmvorrichtung 1 mit dem Montageelement 75. Die Klemmvorrichtung 1 mit dem Montageelement 75 kann hierbei auch als eine Endklemme bezeichnet werden. Durch festes Anziehen der Schraube 71 werden die Schenkel 5 fest in dem Aufnahmebereich 97 verspannt und zugleich das Rahmenelement 303 mittels des Montageelements 75 gegen die Befestigungsschiene 79 geklemmt. Bei der in Fig. 15 und 17 gezeigten Situation ist eine Höhe des Rahmenelements 303 gerade so gewählt, dass das Aufspreizen mittels der Schraube 71 gegebener Länge noch möglich ist.

Das Detail in Fig. 18 zeigt, dass ein für das Greifen des Rahmenelements 303 vorgesehener Endbereich 77 des Montageelements 75 mit einem Erdungspin 78 versehen sein kann.

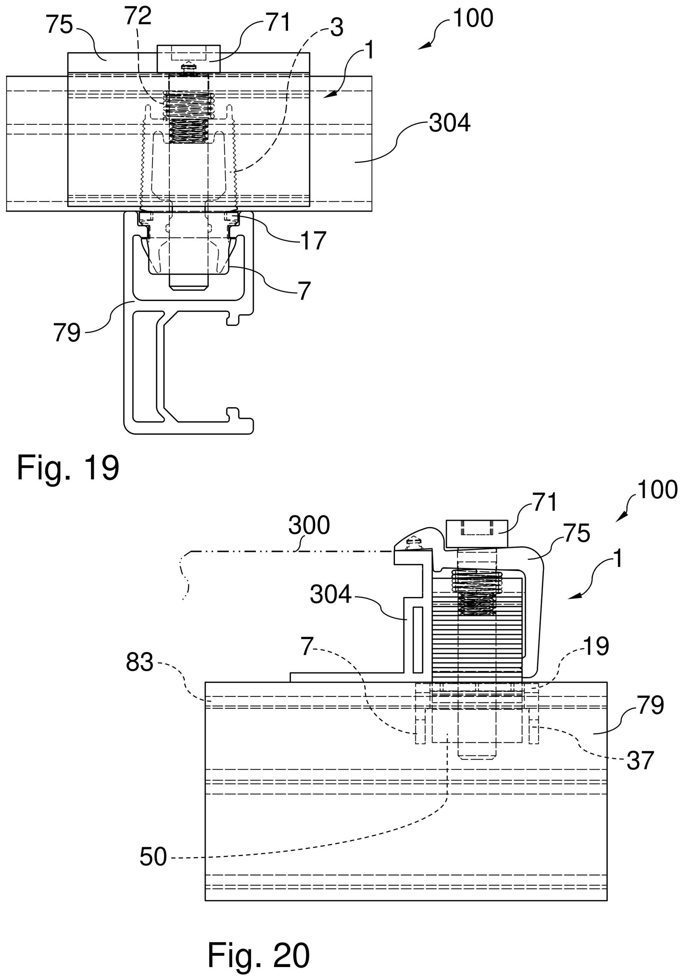

Fig. 19 und 20 illustrieren das Klemmen eines Rahmenelements 304 eines Photovoltaikmoduls 300 eines zweiten Typs mit einer geringeren Höhe als das Rahmenelement 303 und zeigen, dass die Klemmvorrichtung 1 vorteilhaft zusammen mit unterschiedlich bemessenen Rahmenelementen 303, 304 verwendbar ist. In Fig. 19 und 20 ist die Höhe des Rahmenelements 304 gerade noch so groß, dass dieses angesichts der fast vollständig komprimierten Feder 72 noch genügend gegen die Schiene 79 gespannt werden kann.

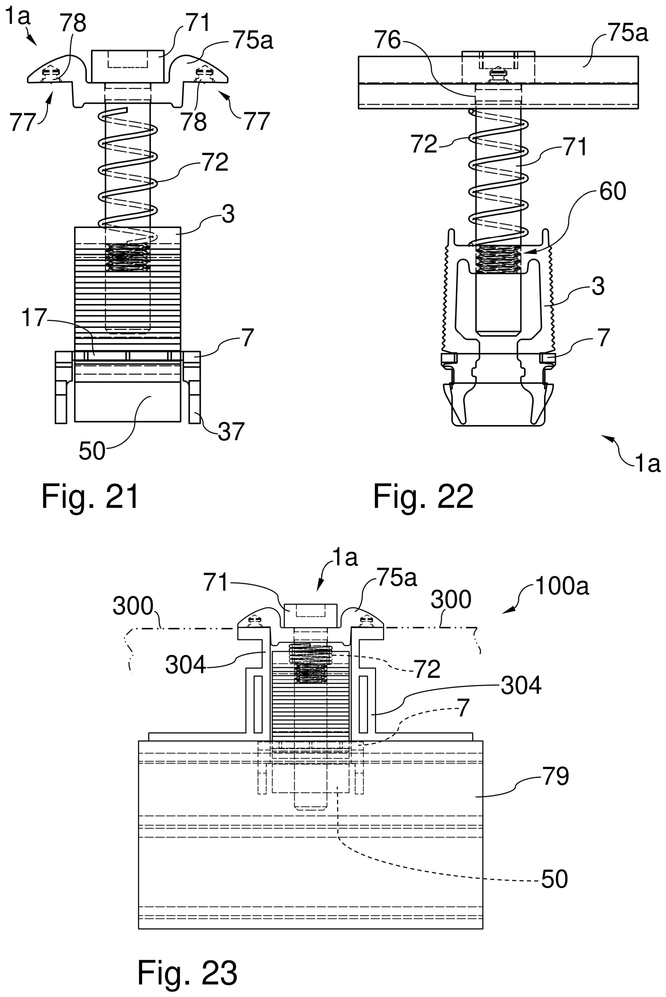

Fig. 21 bis 23 illustrieren eine Klemmvorrichtung 1a gemäß einer Variante des ersten Ausführungsbeispiels. Die Klemmvorrichtung 1a unterscheidet sich von der vorstehend beschriebenen Klemmvorrichtung 1 lediglich darin, dass ein anderes Montageelement 75a vorgesehen ist und die Klemmvorrichtung 1a als eine so genannte Mittelklemme verwendbar ist. Mit anderen Worten können mittels der Klemmvorrichtung 1a zwei einander benachbarte Photovoltaikmodule 300, beispielsweise an deren Rahmenelementen 304, siehe Fig. 23, klemmend befestigt werden. Hierzu ist das Montageelement 75a mit einer plattenartigen Grundform ausgebildet und weist zwei entgegengesetzt angeordnete Endbereiche 77 zum Greifen jeweils eines der Rahmenelemente 304 auf. Über das modifizierte Montageelement 75a hinausgehend ist die Klemmvorrichtung 1a wie die Klemmvorrichtung 1 ausgebildet.

Fig. 15, 17, 19, 20 illustrieren eine Befestigungsanordnung 100 mit der Klemmvorrichtung 1 und der Schiene 79, Fig. 23 eine Befestigungsanordnung 100a mit der Klemmvorrichtung 1a und der Schiene 79.

Ein Kunststoffbauteil 7a als eine erste Variante des Kunststoffbauteils 7 des ersten Ausführungsbeispiels ist in Fig. 13 in einer Draufsicht dargestellt. Das Kunststoffbauteil 7a unterscheidet sich von dem Kunststoffbauteil 7 darin, dass die Rippen 43 weggelassen sind. Rahmenlängsabschnitte 17a eines Rahmens 13a des Kunststoffbauteils 7a verlaufen jeweils im Wesentlichen geradlinig und parallel zueinander sowie im Wesentlichen senkrecht zu Rahmenquerabschnitten 19. Die Rahmenlängsabschnitte 17a und die Rahmenquerabschnitte 19 umgeben und begrenzen einen im Wesentlichen rechteckigen, als Durchgang ausgebildeten Rahmeninnenbereich 23a. Die Schenkel 5 der Spreizklemme 3 und das Kunststoffbauteil 7a können zumindest vor dem Einsetzen der mit diesen gebildeten Baugruppe in den Aufnahmebereich 97 mit Spiel aneinander gehalten sein. Alternativ ist es jedoch ebenfalls denkbar, dass die Schenkel 5 und das Kunststoffbauteil 7a vor dem Einsetzen in den Aufnahmebereich 97 spielfrei oder mit Vorspannung aneinander gehalten sind. Über Vorstehendes hinausgehend ist das Kunststoffbauteil 7a wie das Kunststoffbauteil 7 ausgebildet und wird in gleicher Weise wie das Kunststoffbauteil 7 zusammen mit der Spreizklemme 3, wie oben für das erste Ausführungsbeispiel beschrieben, verwendet.

Ferner zeigt Fig. 14 ein Kunststoffbauteil 7b als eine zweite Variante des Kunststoffbauteils 7 des ersten Ausführungsbeispiels in einer Draufsicht. Das Kunststoffbauteil 7b weist einen Rahmen 13b mit einem als Durchgang ausgebildeten Rahmeninnenbereich 23b auf. Der Rahmeninnenbereich 23b ist hierbei von Rahmenlängsabschnitten 17b und Rahmenquerabschnitten 19 umgeben. Das Kunststoffbauteil 7b unterscheidet sich von dem Kunststoffbauteil 7 darin, dass die Rippen 43 an den Rahmenlängsabschnitten 17b weggelassen sind und zusätzlich die Rahmenlängsabschnitte 17b jeweils zu dem Rahmeninnenbereich 23b hin gewellt oder gebaucht ausgebildet sind. Auf diese Weise können die Rahmenlängsabschnitte 17b mit einer Flexibilität versehen werden, die es beim Zusammenbauen der Spreizklemme 3 und des Kunststoffbauteils 7b durch eine elastische Verformbarkeit des Kunststoffbauteils 7b erleichtert, das Kunststoffbauteil 7b mit der Spreizklemme 3 zum Halten beider aneinander formschlüssig in Eingriff zu bringen. Dies kann insbesondere durch ein flexibles Zurückweichen der nach innen bauchartig vorgewölbten Form der Abschnitte 17b erreicht werden. Nach dem Zusammenfügen der Spreizklemme 3 mit dem Kunststoffbauteil 7b können die Wellenbäuche der Rahmenlängsabschnitte 17b an den Schenkeln 5 elastisch vorgespannt anliegen, was für eine Zentrierung der Spreizklemme 3 und des Kunststoffbauteils 7b zueinander vorteilhaft sein und das Einfügen der Spreizklemme 3 in die Schiene 79 erleichtern kann. Alternativ jedoch ist auch denkbar, dass im zusammengefügten Zustand Spiel gegeben ist. Über das vorstehend Erläuterte hinausgehend ist das Kunststoffbauteil 7b wie das Kunststoffbauteil 7 ausgebildet und wird ebenfalls in gleicher Weise wie das Kunststoffbauteil 7 zusammen mit der Spreizklemme 3, wie oben für das erste Ausführungsbeispiel beschrieben, verwendet.

Eine Klemmvorrichtung 1' gemäß dem zweiten Ausführungsbeispiel zeigen Fig. 24 und 25. Die Klemmvorrichtung 1' ist wiederum für eine stabile und zuverlässige klemmende Befestigung an der Befestigungsschiene 79 sowie zugleich für eine klemmende Befestigung einer Komponente wie etwa des Photovoltaikmoduls 300 an der Schiene 79 ausgebildet.

Die Klemmvorrichtung 1' umfasst eine Baugruppe 2', siehe Fig. 26, ein Montageelement 75', ein als eine Schraube 71 ausgebildetes Spreiz- und Kopplungselement, das die Baugruppe 2' mit dem Montageelement 75' koppelt, und eine die Schraube 71 in deren Umfangsrichtung umgebend angeordnete Feder 72.

Das Montageelement 75' ist, bis auf eine modifizierte Struktur zum besseren Greifen der zu befestigenden Komponente in einem für den Kontakt mit dieser Komponente vorgesehenen Endbereich 77', und eine modifizierte Position eines Erdungspins 78', wie das oben beschriebene Montageelement 75 ausgebildet.

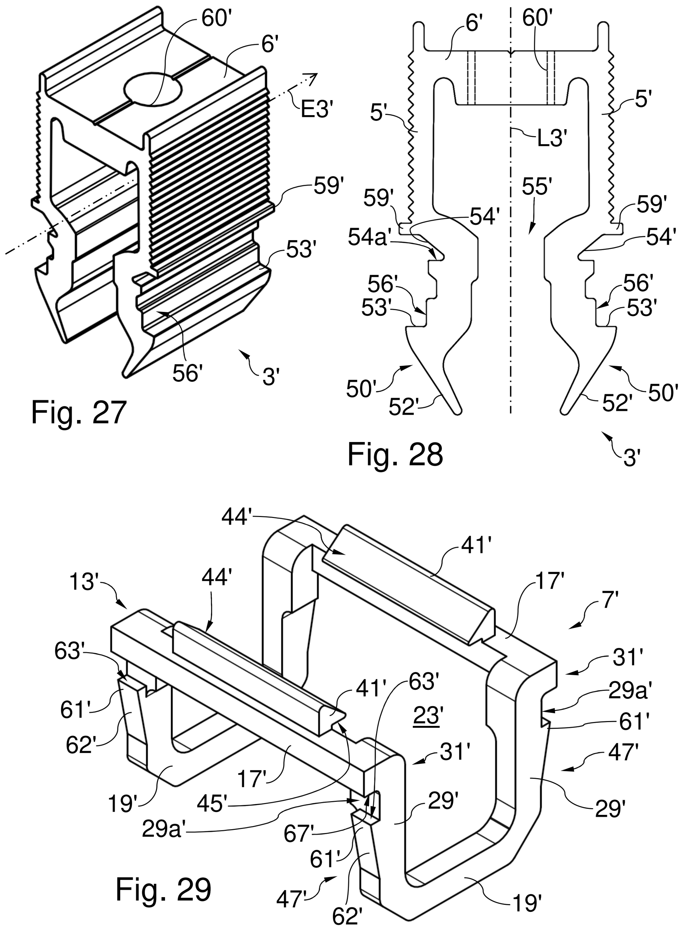

Die Baugruppe 2' ist mit einer Spreizklemme 3' und einem an der Spreizklemme 3' gehaltenen Kunststoffbauteil 7' gebildet. Fig. 27 und 28 zeigen die Spreizklemme 3' separat, Fig. 29 bis 31 das Kunststoffbauteil 7'.

Die Spreizklemme 3' ist, analog der Spreizklemme 3, aus einem stranggepressten Profil aus einem Metallmaterial, insbesondere Aluminium oder einer Aluminiumlegierung, hergestellt. Durch Ablängen des Profils erhaltene Stücke definierter Länge desselben bilden jeweils den Körper einer Spreizklemme 3'.

Die in einem Querschnitt in Bezug auf eine Längsmittelebene L3' der Spreizklemme 3' im Wesentlichen achsensymmetrisch ausgebildete Spreizklemme 3' weist symmetrisch zur Ebene L3' zwei Schenkel 5' auf, die einem Ende, in Fig. 28 dem oberen Ende, der Spreizklemme 3' benachbart durch einen plattenartigen Zwischenabschnitt 6', der sich im Wesentlichen quer zu den Schenkeln 5' erstreckt, miteinander einstückig verbunden sind. Außenseitig bezüglich der Längsmittelebene L3' gesehen weisen die Schenkel 5' bereichsweise eine Riffelung 51' auf.

Im Wesentlichen in der Mitte des Zwischenabschnitts 6' weist dieser eine Durchgangsöffnung 60' auf, die wie bei dem ersten Ausführungsbeispiel als Durchgangsbohrung mit Innengewinde ausgebildet ist und in die die Schraube 71 eingeschraubt werden kann. Nach Zusammenbau der Klemmvorrichtung 1', siehe Fig. 24 und 25, ist die Schraube 71 abschnittsweise in der Durchgangsöffnung 60' aufgenommen.

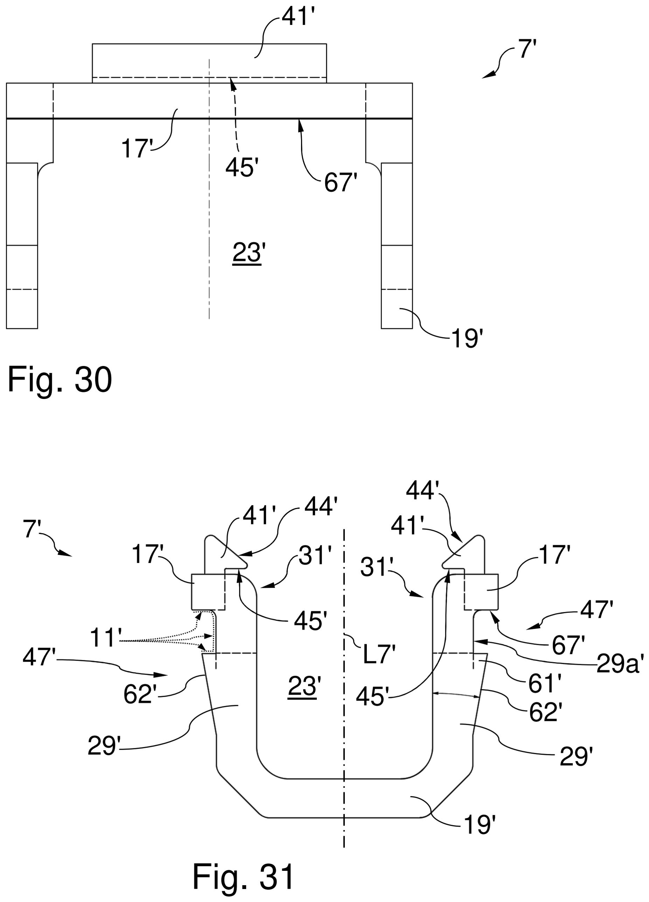

Das Kunststoffbauteil 7' ist aus einem thermoplastischen Kunststoff, insbesondere einem Polyoxymethylen, abgekürzt POM, spritzgegossen und bezüglich einer Längsmittelebene L7' des Kunststoffbauteils 7', siehe Fig. 31, im Wesentlichen achsensymmetrisch ausgebildet.

Auch das Kunststoffbauteil 7' ist einstückig als ein Kunststoffclip ausgebildet, der im zusammengebauten Zustand der Baugruppe 2' die Schenkel 5' der Spreizklemme 3' gemeinsam umgreift.

Bei dem zweiten Ausführungsbeispiel ist das Kunststoffbauteil 7' als ein dreidimensionales rahmenartiges Element ausgebildet und weist somit eine rahmenartige Form 13' mit zwei einander gegenüberliegend angeordneten Rahmenlängsabschnitten 17' und zwei einander gegenüberliegend angeordneten Rahmenquerabschnitten 19' auf. Die rahmenartige Form 13' ermöglicht es dem Kunststoffbauteil 7', die Schenkel 5' zu umgreifen. Die Rahmenlängsabschnitte 17' und die Rahmenquerabschnitte 19', die einstückig miteinander verbunden sind, umgeben und begrenzen zusammen einen Durchgang als einen Rahmeninnenbereich 23' der rahmenartigen Form 13'. Abweichend von dem ersten Ausführungsbeispiel weist der Durchgang, der den Rahmeninnenbereich 23' bildet, bei dem zweiten Ausführungsbeispiel eine nicht-ebene Form auf. Nach Zusammenbau der Baugruppe 2' sind die Schenkel 5' gemeinsam jeweils abschnittsweise in dem Rahmeninnenbereich 23' aufgenommen.

Die Rahmenlängsabschnitte 17' sind im Wesentlichen parallel zueinander angeordnet und verlaufen jeweils im Wesentlichen geradlinig. Hingegen sind bei dem zweiten Ausführungsbeispiel die Rahmenquerabschnitte 19' jeweils mit einer U-artigen Form ausgebildet, siehe beispielsweise Fig. 29 und 31. Die U-artige Form der Rahmenquerabschnitte 19' ist mit Armen 29' und einem die Arme 29' verbindenden Grund ausgebildet. Ein von dem Grund aus gesehen distales Ende 31' jedes der Arme 29' geht jeweils in einen der Rahmenlängsabschnitte 17' einstückig über. Nach Zusammenbau der Baugruppe 2' sind freie, von dem Zwischenabschnitt 6' entfernt angeordnete Endabschnitte 50' der Schenkel 5' bereichsweise zwischen den U-artig geformten Rahmenquerabschnitten 19' angeordnet, siehe zum Beispiel Fig. 25 und 26.

Jeder der beiden Rahmenlängsabschnitte 17' ist auf einer in Fig. 29 bis 31 oberen Längsseite desselben, die von dem Boden der U-artigen Form der Rahmenquerabschnitte 19' abgewandt ist, einstückig mit einer als ein Rasthaken 41' ausgebildeten Rasteinrichtung versehen. Jeder der Rasthaken 41' weist eine zu der Längsmittelebene L7' schräg geneigte Gleitrampe 44' und eine quer zu der Längsmittelebene L7' verlaufende Haltefläche 45' auf. Die Gleitrampen 44' weisen hierbei jeweils zu der Längsmittelebene L7' hin, siehe Fig. 29 und 31. Mittels der Rasthaken 41' kann das Kunststoffbauteil 7' mit der Spreizklemme 3' beim Zusammenbau der Baugruppe 2' rastend formschlüssig verbunden werden.

Die Rasthaken 41' und die Spreizklemme 3' können hierbei derart dimensioniert sein, dass nach dem Zusammenbau der Spreizklemme 3' mit dem Kunststoffbauteil 7' zur Bildung der Baugruppe 2' die Schenkel 5' und das Kunststoffbauteil 7' spielfrei aneinander gehalten sind oder dass alternativ hierzu zumindest in einem nicht in den Aufnahmebereich 97 der Befestigungsschiene 79 eingesetzten Zustand die Spreizklemme 3' und das Kunststoffbauteil 7' mit Spiel aneinander gehalten sind. Eine elastische Vorspannung der Spreizklemme 3' und des Kunststoffbauteils 7' vor dem Einsetzen in die Schiene 79 ist denkbar, jedoch nicht zwingend erforderlich.

Entgegengesetzt und voneinander abgewandt angeordnete seitliche Randbereiche 47' jedes der Arme 29', siehe Fig. 29 und 31, sind jeweils einstückig mit einer vorspringenden Rastnase 61' ausgebildet. Die Rastnase 61' ist mit einer flachen Gleitrampe 62' und einer zu dem benachbarten Rahmenlängsabschnitt 17' hin weisende Rückhaltefläche 63' versehen. Insgesamt weist das Kunststoffbauteil 7' vier Rastnasen 61' auf, die an den vier Armen 29' in gleicher Weise ausgebildet sind.

Der Rastnase 61' gegenüberliegend ist an dem Kunststoffbauteil 7' eine im Wesentlichen ebene Gegenlagerfläche 67' ausgebildet, die der Rückhaltefläche 63' zugewandt ist. Bei dem Kunststoffbauteil 7' des zweiten Ausführungsbeispiels erstreckt sich die Gegenlagerfläche 67' als eine langgestreckte Fläche entlang der gesamten Länge jedes der Rahmenlängsabschnitte 17', in Fig. 29-31 jeweils an deren dem Rasthaken 41' abgewandter Unterseite. Die Gegenlagerfläche 67' ist damit abschnittsweise in den Randbereichen 47' angeordnet, erstreckt sich jedoch über diese hinaus.

Ausgehend von den freien Endabschnitten 50' in Richtung zu dem Zwischenabschnitt 6' hin ist jeder der Schenkel 5' der Spreizklemme 3' an einer Außenseite, in Bezug auf die Längsmittelebene L3' gesehen, in dieser Reihenfolge mit einer in Bezug auf die Längsmittelebene L3' schräg geneigten Rampe 52', einem außenseitigen Rücksprung 53', einer nach außen geöffneten Nut 54' und einem nach außen vorspringenden Flansch 59' versehen. Der Flansch 59' begrenzt hierbei die Nut 54' an einer von dem außenseitigen Rücksprung 53' abgewandten Seite der Nut 54', die bei dem gezeigten zweiten Ausführungsbeispiel der Riffelung 51' benachbart ist. Auf der durch den Flansch 59' begrenzten Seite der Nut 54' weist diese eine von ihrem Grund ausgehend in Bezug auf die Längsmittelebene L3' schräg geneigte Oberfläche auf, deren Neigung jener der Gleitrampen 44' entspricht. Wenngleich der Flansch 59' vorteilhaft ist, kann in einer denkbaren Variante der Flansch 59' alternativ weggelassen sein.

Um die Baugruppe 2' zu montieren, wird die Spreizklemme 3', mit den freien Endabschnitten 50' voran, in den Rahmeninnenbereich 23' eingeführt. Durch die U-artige Formgebung der Rahmenquerabschnitte 19' wird eine elastische Biegbarkeit des Kunststoffbauteils 7' erreicht. Das Kunststoffbauteil 7' ist somit mit einer Flexibilität versehen, welche es beim Zusammenbau der Baugruppe 2' ermöglicht, den Abstand der Rahmenlängsabschnitte 17' und damit der Rasthaken 41' voneinander elastisch zu vergrößern und auf diese Weise das Kunststoffbauteil 7' mit der Spreizklemme 3' zum Halten an dieser formschlüssig rastend in Eingriff zu bringen.

Im zusammengebauten Zustand der Baugruppe 2' verlaufen somit die Rahmenlängsabschnitte 17' entlang einer Extrusionsrichtung E3' der Spreizklemme 3', die Rahmenquerabschnitte 19' in einer Ebene quer zu dieser Extrusionsrichtung E3' und somit im Wesentlichen parallel zu einer Ebene, in der die Schenkel 5' bei elastischem Zusammendrücken dieser bewegt werden können.

Somit wird mit dem zweiten Ausführungsbeispiel eine noch weiter verbesserte Montage der Baugruppe 2' erzielt. Insbesondere ist keine wesentliche Verformung der Spreizklemme 3', für die relativ große Kraft auf die Schenkel 5' aufzubringen ist, erforderlich. Stattdessen werden beim Einsetzen der Spreizklemme 3' in den Rahmeninnenbereich 23' die beiden Rasthaken 41' durch die Wirkung der Gleitrampen 44' auseinander gedrückt, wofür nur ein relativ geringer Kraftaufwand vonnöten ist. Hierbei gelangen auch die Rampen 52' zeitweise in Kontakt mit den Gleitrampen 44'. Die Rasthaken 41' rasten dann jeweils mit ihrer Haltefläche 45' in eine zugeordnete der Nuten 54' ein. Ein zu weites Einschieben der Spreizklemme 3' in den Rahmeninnenbereich 23' wird hierbei zusätzlich durch die Flansche 59', die im Wesentlichen quer zur Längsmittelebene L3' vom Schenkel 5' abstehen, verhindert, indem die Rasthaken 41' jeweils mit deren Oberkante dort anstehen. In diesem Zustand ist das Kunststoffbauteil 7' formschlüssig durch Zusammenwirken der Rasthaken 41' mit den Nuten 54' an der Spreizklemme 3' gehalten, wobei in jeder der Nuten 54' einer der Rasthaken 41' abschnittsweise aufgenommen ist

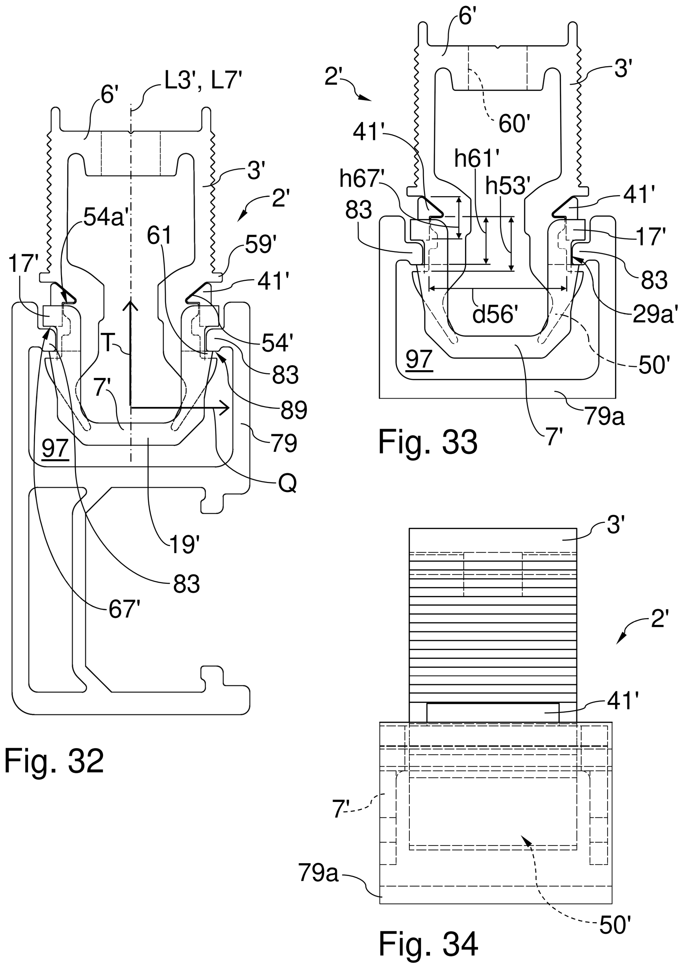

Auch die Baugruppe 2' kann bereits in dem in Fig. 26 gezeigten Zustand mit den freien Endabschnitten 50' und dem Kunststoffbauteil 7' voran in den Aufnahmebereich 97 der Befestigungsschiene 79 eingesetzt werden. Dies ist in Fig. 32 beispielhaft für das Einsetzen in die Befestigungsschiene 79, und in Fig. 33 und 34 für das Einsetzen in die Befestigungsschiene 79a eines anderen Typs dargestellt.

Bevorzugt wird jedoch zunächst die Baugruppe 2' mit der Feder 72, der Schraube 71 und dem Montageelement 75' zur Bildung der Klemmvorrichtung 1' zusammengebaut oder vormontiert, wobei das Montageelement 75' zum Hindurchführen der Schraube 71 wiederum eine Durchgangsbohrung 76' ohne Gewinde aufweist. Der Zusammenbau zur Bildung der Klemmvorrichtung 1' erfolgt in gleicher Weise wie oben für die Klemmvorrichtung 1 des ersten Ausführungsbeispiels beschrieben, wobei die Feder 72 wiederum das Montageelement 75' gegen die Spreizklemme 3' vorspannen kann, so dass das Montageelement 75' am Kopf der Schraube 71 anliegen kann.

In gleicher Weise wie bei dem ersten Ausführungsbeispiel dient die Schraube 71 der Klemmvorrichtung 1' der Verbindung von Montageelement 75' und Spreizklemme 3', der Kraftaufbringung auf die zu befestigende Komponente und zum Auseinanderspreizen der Schenkel 5' in einer Richtung im Wesentlichen quer zur Längsmittelebene L3'. Auch im Zustand der Fig. 24 und 25 ist die Schraube 71 noch nicht so weit eingeschraubt, dass sie zum Spreizen wirksam werden kann, so dass die Schenkel 5' quer zur Längsmittelebene L3' elastisch aufeinander zu bewegbar sind.

Zur Verbindung der Klemmvorrichtung 1' mit der Befestigungsschiene 79 werden die Schenkel 5' und das Kunststoffbauteil 7', mit den freien Endabschnitten 50' voran, in den Aufnahmebereich 97 eingesetzt, wobei durch Aufbringen genügender Kraft die Schenkel 5' mit Hilfe der Rampen 52' quer zur Längsmittelebene L3' elastisch zusammengedrückt werden und nach elastischem Zurückfedern jeder der Rücksprünge 53' hinter einen der Hinterschnitte 89 greift. Im vollständig eingesetzten Zustand sind, siehe Fig. 32 und 33, die rippenartigen Querschnittsbereiche 83 der Befestigungsschiene 79 jeweils bereichsweise von dem Rücksprung 53' des jeweils zugeordneten Schenkels 5' hintergriffen, wobei die Querschnittsbereiche 83 und die Schenkel 5' einander jedoch in diesem Zustand noch nicht berühren.

Beim Einsetzen in die Befestigungsschiene 79 gelangen zudem die Rastnasen 61' des Kunststoffbauteils 7' in den Randbereichen 47', welche in dem in den Aufnahmebereich 97 eingesetzten Zustand in der Querrichtung Q des Aufnahmebereichs 97 jeweils nach außen weisen, rastend in Eingriff mit den Hinterschnitten 89.

Die Abmessungen der Querschnittsbereiche 83, die Position und Abmessungen der Nut 54' und hierbei insbesondere die Position der von der Haltefläche 45' hintergriffenen Begrenzungsfläche 54a' der Nut 54', die Abstände der Rastnasen 61' von den jeweils zugewandten Gegenlagerflächen 67' und die Abstände der Rastnasen 61' und Gegenlagerflächen 67' von den Rasthaken 41' an den Rahmenlängsabschnitten 17', sind parallel zu den in der Baugruppe 2' im Wesentlichen miteinander zusammenfallend angeordneten Längsmittelebenen L3' und L7' und somit im eingesetzten Zustand der Klemmvorrichtung 1' im Wesentlichen parallel zu der Tiefenrichtung T des Aufnahmebereichs 97 derart gewählt, dass eine Berührung der Querschnittsbereiche 83 mit den Schenkeln 5' der Spreizklemme 3' verhindert wird. Beispielhaft zeigt Fig. 33 den Abstand h61' der Rastnase 61' von der Haltefläche 45', den Abstand h67' der Gegenlagerfläche 67' von der Oberkante des Rasthakens 41', sowie den Abstand h53' des Rücksprungs 53' von der hintergriffenen Begrenzungsfläche 54a' der Nut 54'. Insbesondere h61', h67' und h53' sind entsprechend geeignet gewählt.

Mittels der Rastnasen 61' und der Gegenlagerflächen 67' wird somit eine Führung des Kunststoffbauteils 7' in der Tiefenrichtung T des Aufnahmebereichs 97 erreicht, wobei insbesondere die Rastnasen 61' einen metallischen Kontakt der Querschnittsbereiche 83 mit den Rücksprüngen 53' der Spreizklemme 3' verhindern und die Gegenlagerflächen 67' bewirken, dass die Spreizklemme 3' und damit die Klemmvorrichtung 1' nicht weiter als gewünscht in den Aufnahmebereich 97 eingeführt werden kann. Insbesondere liegt, siehe bspw. Fig. 32, die Baugruppe 2' mit den Gegenlagerflächen 67' auf den Querschnittsbereichen 83 auf.

Zudem ist in Richtung quer zu den Längsmittelebenen L3', L7' und somit im Wesentlichen parallel zu der Querrichtung Q ein Abstand d56' von an die Rücksprünge 53' angrenzenden Seitenflächen 56' der Schenkel 5' relativ zu einem Abstand der jeweils zwischen der Gegenlagerfläche 67' und der Rastnase 61' befindlichen, schmalseitigen Außenflächenbereiche 29a' der Arme 29' geringer gewählt.

Auch bei dem zweiten Ausführungsbeispiel wird durch den Kontakt des Kunststoffbauteils 7' mit der Befestigungsschiene 79 in Berührungsbereichen 11' somit die direkte Berührung der Schenkel 5' mit der Schiene 79, insbesondere mit den den Schenkeln 5' benachbarten Querschnittsabschnitten 83, sowohl in der Tiefenrichtung T als auch in der Querrichtung Q und damit in zwei quer zueinander verlaufenden Richtungen verhindert, bevor die Schenkel 5' für das Klemmen der Spreizklemme 3' an der Befestigungsschiene 79 auseinandergespreizt werden. Somit verhindert das Kunststoffbauteil 7' durch Berührung mit den Querschnittsbereichen 83 einen Kontakt der metallischen Spreizklemme 3' mit der ebenfalls metallischen Befestigungsschiene 79. Eine präzise Positionierung des Kunststoffbauteils 7' an der Spreizklemme 3' wird mit Hilfe der Rahmenlängsabschnitte 17' mit den Rasthaken 41' und der Nuten 54', zusätzlich unterstützt durch die Flansche 59', erreicht.

Die Berührungsbereiche 11' des Kunststoffbauteils 7', siehe insbesondere Fig. 31, sind somit auch bei dem zweiten Ausführungsbeispiel derart angeordnet, dass nach dem Einsetzen der Schenkel 5' und des Kunststoffbauteils 7' in den Aufnahmebereich 97 durch einen Kontakt des Kunststoffbauteils 7' mit der Befestigungsschiene 79 in den Berührungsbereichen 11' eine direkte Berührung der Schenkel 5' mit diesen jeweils benachbarten Abschnitten der Befestigungsschiene 79, insbesondere den Querschnittsbereichen 83 dieser, verhindert wird, bevor die Schenkel 5' zum Klemmen der Spreizklemme 3 an der Befestigungsschiene 79 gespreizt werden.

Die Berührungsbereiche 11' des Kunststoffbauteils 7' wirken auch bei dem zweiten Ausführungsbeispiel vor dem Spreizen der Schenkel 5' jeweils als Gleitflächen und ermöglichen vorteilhaft ein gleitendes, leichtgängiges Verschieben der Baugruppe 2' und damit der Klemmvorrichtung 1' entlang der Befestigungsschiene 79. Der zwischen dem Kunststoffbauteil 7' und der metallischen Befestigungsschiene 79 somit gegebene Gleitkontakt von Kunststoff auf Metall ermöglicht geringe Reibung, verhindert ein schwergängiges oder stockendes Verschieben und ermöglicht, wie oben beschrieben, eine einfache, angenehme Handhabung der Klemmvorrichtung 1' sowie deren präzise Positionierung.

Die abschließende feste Fixierung der Spreizklemme 3' an der Befestigungsschiene 79 und zugleich ein klemmendes Befestigen einer zu befestigenden Komponente erfolgt, indem die Schraube 71 weiter in die Durchgangsöffnung 60' eingeschraubt wird, womit der Schaft der Schraube 71 oder zumindest deren freies Ende in einen verengten Zwischenraum 55' zwischen den Schenkeln 5' eindringt und die Schenkel 5' in Querrichtung Q auseinanderspreizt. Die bereits in den Aufnahmebereich 97 eingreifenden Schenkel 5', deren Kontakt mit der metallischen Schiene 79 durch das Kunststoffbauteil 7' zuvor verhindert wurde, gelangen hierdurch formschlüssig in Oberflächenkontakt mit den Querschnittsbereichen 83 und können durch das Anziehen der Schraube 71 fest und stabil gegen die Befestigungsschiene 79 verklemmt werden, so dass sowohl Kraft- als auch Formschluss erzielt werden.

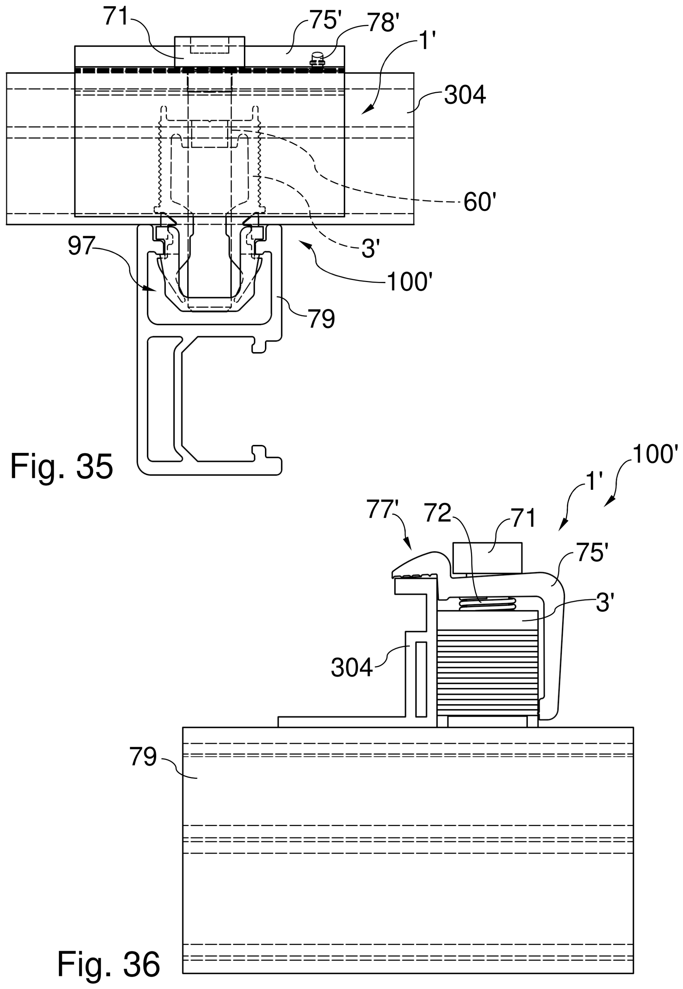

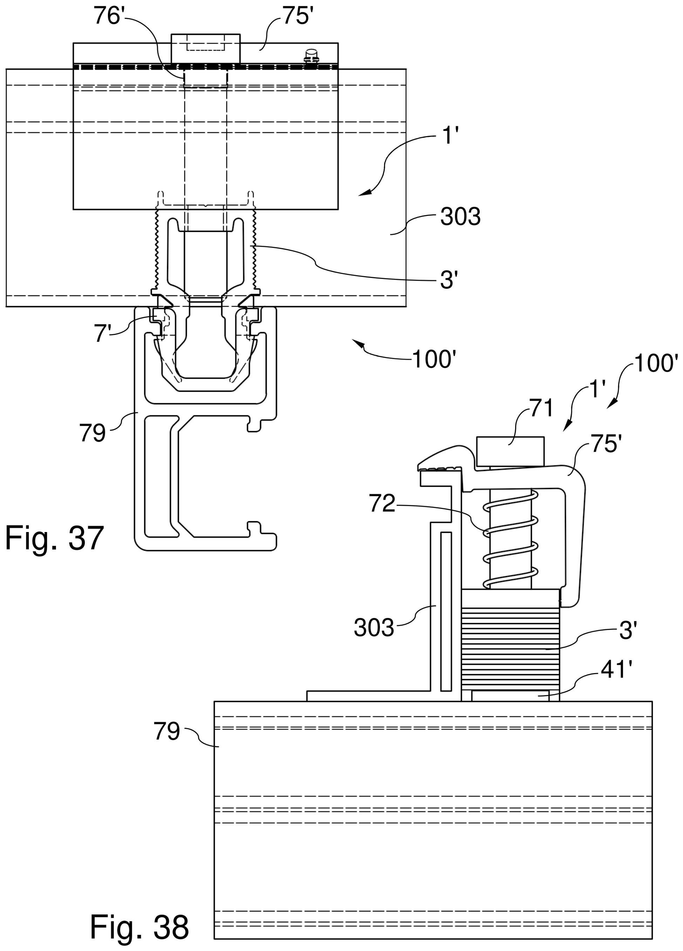

Fig. 35 und 36 illustrieren das Klemmen des Rahmenelements 304 des Photovoltaikmoduls 300 des zweiten Typs an der Befestigungsschiene 79 mittels der Klemmvorrichtung 1' mit dem Montageelement 75', Fig. 37 und 38 in analoger Weise das Klemmen des Rahmenelements 303 des Photovoltaikmoduls 300 des ersten Typs, wobei die Klemmvorrichtung 1' mit dem Montageelement 75' wiederum als eine Endklemme bezeichnet werden kann. Durch festes Anziehen der Schraube 71 werden die Schenkel 5' fest in dem Aufnahmebereich 97 verspannt und zugleich das Rahmenelement 304 bzw. 303 mittels des Montageelements 75' gegen die Befestigungsschiene 79 geklemmt. Auch die Klemmvorrichtung 1' kann vorteilhaft zusammen mit unterschiedlich bemessenen Rahmenelementen 303, 304 verwendet werden.

Fig. 35-38 illustrieren eine Befestigungsanordnung 100' mit der Klemmvorrichtung 1' und der Schiene 79.

In den Fig. 15 bis 20, 23 sowie 35 bis 37 sind lediglich die Rahmenelemente 303, 304 näher dargestellt, wobei weitere Bestandteile der Photovoltaikmodule 300 nicht bzw. in Fig. 20, 23 nur andeutungsweise gezeigt sind. Es versteht sich jedoch, dass das als Ganzes montierte Photovoltaikmodul 300 weitere Bestandteile umfasst, die durch die Rahmenelemente 303 oder 304 getragen und geschützt sind.

In einer nicht dargestellten Variante der Klemmvorrichtung 1' des zweiten Ausführungsbeispiels kann, wie oben bereits für das erste Ausführungsbeispiel beschrieben, statt des Montageelements 75' ein zur Bildung einer Mittelklemme geeignetes Montageelement, wie etwa das Montageelement 75a, vorgesehen sein, um beispielsweise einander benachbarte Photovoltaikmodule 300 klemmend zu befestigen.

Wenngleich die vorliegende Erfindung vorstehend anhand bevorzugter Ausführungsbeispiele vollständig beschrieben wurde, ist sie nicht darauf beschränkt, sondern auf vielfältige Art und Weise modifizierbar.

### Bezugszeichenliste

- 1, 1a, 1': Klemmvorrichtung
- 2, 2': Baugruppe
- 3, 3': Spreizklemme
- 5, 5': Schenkel
- 6, 6': Zwischenabschnitt
- 7, 7', 7a, 7b: Kunststoffbauteil
- 11, 11': Berührungsbereich
- 13, 13a, 13b: Rahmen
- 13': dreidimensionales rahmenartiges Element
- 17, 17': Rahmenlängsabschnitt
- 17a, 17b: Rahmenlängsabschnitt
- 19, 19': Rahmenquerabschnitt
- 23, 23': Rahmeninnenbereich
- 23a, 23b: Rahmeninnenbereich
- 29': Arm (Rahmenquerabschnitt)
- 29a': Außenflächenbereich (Arm)
- 31': Ende
- 37: Abschlussquerwand
- 41': Rasthaken
- 43: Rippe
- 44': Gleitrampe
- 45': Haltefläche
- 47, 47': Randbereich
- 50, 50': freier Endabschnitt
- 51, 51': Riffelung
- 52, 52': Rampe
- 53: erste Nut
- 53': Rücksprung
- 54: zweite Nut
- 54': Nut
- 54a': Begrenzungsfläche
- 55, 55': verengter Zwischenraum
- 56': Seitenfläche
- 59, 59': Flansch
- 60, 60': Durchgangsöffnung
- 61, 61': Rastnase
- 62, 62': Gleitrampe
- 63, 63': Rückhaltefläche
- 64: Außenflächenbereich
- 67, 67': Gegenlagerfläche
- 71: Schraube
- 72: Feder
- 75, 75a, 75': Montageelement
- 76, 76': Durchgangsöffnung
- 77, 77': Endbereich
- 78, 78': Erdungspin
- 79, 79a: Befestigungsschiene
- 83: Querschnittsbereich
- 89: Hinterschnitt
- 97: Aufnahmebereich
- 100, 100a: Befestigungsanordnung
- 100': Befestigungsanordnung
- 200: Gebäudedach
- 300: Photovoltaikmodul
- 301, 302: Rahmenabschnitt (Photovoltaikmodul)
- 303, 304: Rahmenelement
- h61, h67: Abstand
- d53: Abstand
- h61', h67': Abstand
- h53': Abstand
- d56': Abstand
- E3, E3': Extrusionsrichtung
- L3, L3': Längsmittelebene (Spreizklemme)
- L7, L7': Längsmittelebene (Kunststoffbauteil)
- Q: Querrichtung
- T: Tiefenrichtung

## Patentansprüche

1. Baugruppe (2; 2') einer Klemmvorrichtung (1, 1a; 1'),
mit einer Spreizklemme (3; 3') mit Schenkeln (5; 5'), die in einen Aufnahmebereich (97) einer Befestigungsschiene (79) einsetzbar und zum Klemmen der Spreizklemme (3; 3') an der Befestigungsschiene (79) nach dem Einsetzen in den Aufnahmebereich (97) spreizbar sind, und
mit einem Kunststoffbauteil (7, 7a, 7b; 7'), das an der Spreizklemme (3; 3') gehalten und gemeinsam mit den Schenkeln (5; 5') in den Aufnahmebereich (97) einsetzbar ist und Berührungsbereiche (11; 11') aufweist, die derart angeordnet sind, dass nach dem Einsetzen der Schenkel (5; 5') und des Kunststoffbauteils (7, 7a, 7b; 7') in den Aufnahmebereich (97) durch einen Kontakt des Kunststoffbauteils (7, 7a, 7b; 7') mit der Befestigungsschiene (79) in den Berührungsbereichen (11; 11') mindestens in einem Zustand der Spreizklemme (3; 3') vor dem Spreizen der Schenkel (5; 5') für das Klemmen der Spreizklemme (3; 3') an der Befestigungsschiene (79) eine direkte Berührung der Schenkel (5; 5') mit diesen jeweils benachbarten Abschnitten der Befestigungsschiene (79) verhinderbar ist.

2. Baugruppe nach Anspruch 1,
**dadurch gekennzeichnet,**
**dass** die Berührungsbereiche (11; 11') des Kunststoffbauteils (7, 7a, 7b; 7') jeweils als Gleitflächen ausgebildet sind, wobei die Gleitflächen nach dem Einsetzen in den Aufnahmebereich (97) und vor dem Spreizen der Schenkel (5; 5') der Spreizklemme (3; 3') ein gleitendes, insbesondere leichtgängiges, Verschieben der Baugruppe (2; 2') entlang der Befestigungsschiene (79) ermöglichen; und/oder
**dass** durch den Kontakt des Kunststoffbauteils (7, 7a, 7b; 7') mit der Befestigungsschiene (79) in den Berührungsbereichen (11; 11') die direkte Berührung der Schenkel (5; 5') mit den diesen benachbarten Abschnitten der Befestigungsschiene (79) in zwei nichtparallelen, insbesondere zwei quer zueinander verlaufenden, Richtungen, bevorzugt in einer Tiefenrichtung (T) und einer Querrichtung (Q) des Aufnahmebereichs (97), mindestens in dem Zustand der Spreizklemme (3; 3') vor dem Spreizen der Schenkel (5; 5') für das Klemmen der Spreizklemme (3; 3') an der Befestigungsschiene (79) verhindert wird.

3. Baugruppe nach einem der vorstehenden Ansprüche,
**dadurch gekennzeichnet,**
**dass** das Kunststoffbauteil (7b; 7') mit einer Flexibilität versehen ist, welche es beim Zusammenbau der Baugruppe (2; 2') ermöglicht, das Kunststoffbauteil (7b; 7') mittels elastischer Verformung desselben mit der Spreizklemme (3; 3') zum Halten an dieser formschlüssig in Eingriff zu bringen; und/oder
**dass** das Kunststoffbauteil (7, 7a, 7b; 7') als ein Kunststoffclip ausgebildet ist; und/oder
**dass** das Kunststoffbauteil (7, 7a, 7b; 7') die Schenkel (5; 5'), insbesondere gemeinsam, umgreift; und/oder
**dass** das Kunststoffbauteil (7') mit einer Rasteinrichtung (41') oder Rasteinrichtungen (41'), insbesondere einem oder mehreren Rasthaken (41'), versehen ist, mittels der oder derer das Kunststoffbauteil (7') rastend mit der Spreizklemme (3') verbunden ist.

4. Baugruppe nach einem der vorstehenden Ansprüche,
**dadurch gekennzeichnet, dass** das Kunststoffbauteil (7, 7a, 7b; 7') mit einem Rahmen (13, 13a, 13b) oder mit einer rahmenartigen Form (13') ausgebildet ist, der Rahmen (13, 13a, 13b) oder die rahmenartige Form (13') Rahmenlängsabschnitte (17, 17a, 17b; 17') und Rahmenquerabschnitte (19; 19') aufweist, die einen Rahmeninnenbereich (23, 23a, 23b; 23') des Rahmens (13, 13a, 13b) oder der rahmenartigen Form (13') begrenzen, und die Schenkel (5; 5') der Spreizklemme (3; 3') , insbesondere gemeinsam, jeweils abschnittsweise in dem Rahmeninnenbereich (23, 23a, 23b; 23') aufgenommen sind.

5. Baugruppe nach Anspruch 4,
**dadurch gekennzeichnet, dass** das Kunststoffbauteil (7') als ein dreidimensionales rahmenartiges Element ausgebildet ist und insbesondere dass das dreidimensionale rahmenartige Element zwei einander gegenüberliegend angeordnete der Rahmenlängsabschnitte (17') und zwei einander gegenüberliegend angeordnete der Rahmenquerabschnitte (19') aufweist.

6. Baugruppe nach Anspruch 5,
**dadurch gekennzeichnet, dass** die Rahmenquerabschnitte (19') mit einer U-artigen Form ausgebildet sind und Enden (31') von Armen (29') der U-artigen Form jeweils in einen der Rahmenlängsabschnitte (17') übergehen und insbesondere dass freie Endabschnitte (50') der Schenkel (5') der Spreizklemme (3') bereichsweise zwischen den U-artig geformten Rahmenquerabschnitten (19') angeordnet sind.

7. Baugruppe nach Anspruch 4,
**dadurch gekennzeichnet, dass** der Rahmen (13, 13a, 13b) des Kunststoffbauteils (7, 7a, 7b) zwei einander gegenüberliegend angeordnete der Rahmenlängsabschnitte (17, 17a, 17b) und zwei einander gegenüberliegend angeordnete der Rahmenquerabschnitte (19) aufweist, wobei die Rahmenlängsabschnitte (17, 17a, 17b) und die Rahmenquerabschnitte (19) einen den Rahmeninnenbereich (23, 23a, 23b) bildenden Durchgang umgebend verbunden sind.

8. Baugruppe nach Anspruch 7,
**dadurch gekennzeichnet, dass** die Rahmenquerabschnitte (19) sich in Abschlussquerwänden (37) des Kunststoffbauteils (7, 7a, 7b), welche insbesondere im Wesentlichen eben ausgebildet sind, fortsetzen und insbesondere dass freie Endabschnitte (50) der Schenkel (5) der Spreizklemme (3) bereichsweise zwischen den Abschlussquerwänden (37) angeordnet sind.

9. Baugruppe nach einem der Ansprüche 4 bis 8,
**dadurch gekennzeichnet,**
**dass** die Rahmenlängsabschnitte (17, 17a, 17b; 17') und die Rahmenquerabschnitte (19; 19') einstückig miteinander verbunden sind; und/oder **dadurch gekennzeichnet,**
**dass** die Rahmenlängsabschnitte (17; 17a; 17') jeweils im Wesentlichen geradlinig verlaufen und/oder die Rahmenlängsabschnitte (17) jeweils zu dem Rahmeninnenbereich (23) hin vorstehende Rippen (43) aufweisen; oder
**dass** die Rahmenlängsabschnitte (17b) jeweils zu dem Rahmeninnenbereich (23b) hin gewellt ausgebildet sind; und/oder
**dadurch gekennzeichnet, dass** die Rahmenlängsabschnitte (17') jeweils mit mindestens einem Rasthaken (41') ausgebildet sind, wobei das Kunststoffbauteil (7') mittels der Rasthaken (41') rastend mit der Spreizklemme (3') verbunden ist.

10. Baugruppe nach einem der vorstehenden Ansprüche,
**dadurch gekennzeichnet,**
**dass** die Schenkel (5) der Spreizklemme (3) jeweils eine nach außen geöffnete erste Nut (53) zur mindestens abschnittsweisen Aufnahme eines in den Aufnahmebereich (97) vorspringenden Querschnittsbereichs (83) der Befestigungsschiene (79) aufweisen und jeweils mit einer nach außen geöffneten zweiten Nut (54), in der das Kunststoffbauteil (7, 7a, 7b) abschnittsweise aufgenommen ist, ausgebildet sind, und insbesondere dass die erste und zweite Nut (53, 54) durch einen nach außen vorspringenden Flansch (59) jeweils des Schenkels (5) voneinander abgegrenzt sind; oder **dadurch gekennzeichnet,**
**dass** die Schenkel (5') der Spreizklemme (3') jeweils einen außenseitigen Rücksprung (53') zum mindestens abschnittsweisen Hintergreifen eines in den Aufnahmebereich (97) vorspringenden Querschnittsbereichs (83) der Befestigungsschiene (79) aufweisen und jeweils mit einer nach außen geöffneten Nut (54'), in der das Kunststoffbauteil (7') abschnittsweise aufgenommen ist, ausgebildet sind, und insbesondere dass die Nut (54') an einer von dem außenseitigen Rücksprung (53') abgewandten Seite dieser durch einen nach außen vorspringenden Flansch (59') jeweils des Schenkels (5') begrenzt ist.

11. Baugruppe nach einem der vorstehenden Ansprüche,
**dadurch gekennzeichnet, dass** das Kunststoffbauteil (7, 7a, 7b; 7') in entgegengesetzten Randbereichen (47; 47') desselben, die in dem in den Aufnahmebereich (97) der Befestigungsschiene (79) eingesetzten Zustand in einer Querrichtung (Q) des Aufnahmebereichs (97) jeweils nach außen weisen, jeweils mit einer vorspringenden Rastnase (61; 61') für einen rastenden Eingriff in die Befestigungsschiene (79) zur Führung des Kunststoffbauteils (7, 7a, 7b; 7') in einer Tiefenrichtung (T) des Aufnahmebereichs (97) und mit einer der Rastnase (61; 61') gegenüberliegend angeordneten Gegenlagerfläche (67; 67') ausgebildet ist, und insbesondere dass hierbei die Rastnase (61; 61') jeweils für ein Zusammenwirken mit einem Hinterschnitt (89) der Befestigungsschiene (79), vorzugsweise einem durch die Schenkel (5; 5') der Spreizklemme (3; 3') jeweils formschlüssig hintergreifbaren Hinterschnitt (89), ausgebildet ist; und ferner insbesondere, in Verbindung mit Anspruch 6 oder 8, **dadurch gekennzeichnet, dass** die Rastnasen (61; 61') an den Armen (29') der U-artigen Form der Rahmenquerabschnitte (19') oder an den Abschlussquerwänden (37) ausgebildet sind.

12. Baugruppe nach einem der vorstehenden Ansprüche,
**dadurch gekennzeichnet,**
**dass** die Schenkel (5; 5') und das Kunststoffbauteil (7, 7a, 7b; 7') zumindest vor dem Einsetzen in den Aufnahmebereich (97) mit Spiel aneinander gehalten sind, oder
**dass** die Schenkel (5; 5') und das Kunststoffbauteil (7, 7a, 7b; 7') vor dem Einsetzen in den Aufnahmebereich (97) spielfrei aneinander gehalten sind und insbesondere eine elastische Vorspannung gegeneinander aufweisen;
und/oder **dadurch gekennzeichnet,**
**dass** die Schenkel (5; 5') der Spreizklemme (3; 3') durch einen Zwischenabschnitt (6; 6') miteinander verbunden sind, wobei der Zwischenabschnitt (6; 6') der Spreizklemme (3; 3') eine Durchgangsöffnung (60; 60') zur abschnittsweisen Aufnahme eines Spreizelements (71), insbesondere einer Schraube (71), mittels desselben die Schenkel (5; 5') spreizbar sind, aufweist;
und/oder **dadurch gekennzeichnet,**
**dass** die Spreizklemme (3; 3') aus oder mit einem Metallmaterial, vorzugsweise einem Aluminiummaterial, ausgebildet ist und insbesondere dass die Spreizklemme (3; 3') als ein aus dem Metallmaterial mittels eines Fertigungsverfahrens umfassend Strangpressen und Ablängen gebildeter Körper oder mit einem derartigen Körper ausgebildet ist;
und/oder **dadurch gekennzeichnet,**
**dass** das Kunststoffbauteil (7, 7a, 7b; 7') mit einem thermoplastischen Kunststoff, insbesondere mit einem Polyoxymethylen, ausgebildet ist;
und/oder **dadurch gekennzeichnet,**
**dass** das Kunststoffbauteil (7, 7a, 7b; 7') mittels Spritzgießens gefertigt ist;
und/oder **dadurch gekennzeichnet,**
**dass** die Spreizklemme (3; 3') und das Kunststoffbauteil (7, 7a, 7b; 7') jeweils in Bezug auf eine Längsmittelebene (L3, L7; L3', L7') dieser im Wesentlichen achsensymmetrisch ausgebildet sind.

13. Klemmvorrichtung (1, 1a; 1') mit einer Baugruppe (2; 2') gemäß einem der vorstehenden Ansprüche, einem Montageelement (75, 75a; 75') und einer das Montageelement (75, 75a; 75') und die Spreizklemme (3; 3') der Baugruppe (2; 2') koppelnden Schraube (71), mittels der die Schenkel (5; 5') der Spreizklemme (3; 3') spreizbar sind.

14. Klemmvorrichtung nach Anspruch 13,
**dadurch gekennzeichnet, dass** das Montageelement (75, 75a; 75') und die Spreizklemme (3; 3') mittels einer zwischen diesen angeordneten Feder (72) gegeneinander vorspannbar oder vorgespannt sind, und insbesondere dass die Feder (72) die Schraube (71) umgebend angeordnet ist.

15. Befestigungsanordnung (100, 100a; 100') mit
mindestens einer Befestigungsschiene (79) und
mindestens einer Klemmvorrichtung (1, 1a; 1') umfassend eine Baugruppe (2; 2') gemäß einem der Ansprüche 1 bis 12 sowie ein mit der Baugruppe (2; 2') gekoppeltes Montageelement (75, 75a; 75'),
wobei die Klemmvorrichtung (1, 1a; 1') für eine klemmende Befestigung einer Komponente (300), insbesondere eines Photovoltaikmoduls (300), an der Befestigungsschiene (79) mittels des Montageelements (75, 75a; 75') ausgebildet ist.
